# EUROPEAN PATENT APPLICATION

(11) **EP 4 718 240 A1**
(43) Date of publication of application: **01.04.2026**
(21) Application number: 24203576.4
(22) Date of filing: 30.09.2024
(51) Int. Cl.: G06F 9/30, G06F 12/1027, G06F 12/1072

(54) **DATA SURFACE DEFINITION IN A GLOBALLY SHARED DISTRIBUTED COMPUTING SYSTEM**

(71) Applicant: Imec VZW, 3001 Leuven (BE)
(72) Inventor: VERACHTERT, Wilfried, 3140 Keerbergen (BE); GURDEEP SINGH, Robbert, 3370 Boutersem (BE); HABER, Tom, 3560 Lummen (BE); NACKAERTS, Axel, 3053 Haasrode (BE); ASHBY, Thomas, 3000 Leuven (BE); WUYTS, Roel, 3190 Boortmeerbeek (BE); MEJDRICH, Eric, 3001 Heverlee (BE)
(74) Representative: Winger

(57) **Abstract**

A memory access method (1600) and a computer implementing the method are disclosed. The method comprises: organizing data to be accessed (1601) in the computer memory as application object; providing a view (1602) on at least one of the application objects present in the computer memory, the view including a view definition expressive of a selection of data elements from one or multiple referenced application objects; compiling the view (1603) into a linked sequence of machine instructions; storing the compiled view (1604) in a view table and assigning a view tag to each row of the view table; in response to a compute core request (1605) for a selected data element expressed through the view, locating and executing the compiled view (1606, 1607) to determine the logical address for and the application object containing the requested data element; calculating the physical address (1610) corresponding to the logical address of the requested data element; accessing the computer memory (1611) at the physical address of the requested data element.

## Description

### Field of the invention

The present invention generally relates to the field of data access methods for application objects in computing systems and more particularly relates to methods for exposing application object data in the computer memory of object-based distributed computer architectures as memory view objects.

### Background of the invention

In the context of distributed and globally shared computing systems, raw data for computations is preferably kept in memory close to the compute cores that consume this data (principle of data locality). However, this is difficult to achieve for large amounts of input data, which may be spread out across multiple compute nodes, or parallel computing applications in which the workload cannot be scheduled reliably in advance and therefore require the transmission of large amounts of data to idle nodes to achieve workload balancing. As a result, memory bandwidth limitations or network congestion may lead to a performance drop in terms of efficient utilization of the available computational resources. The transfer of data for computations between networked compute nodes may be complicated by the fact that the different compute nodes use different memory spaces and addressing.

On the other hand, creating multiple copies of the same data prohibits an efficient utilization of the available memory resources and may cause memory coherence issues between the different copies. Moreover, copying large amounts of data of which only a subset is ultimately needed for the computations is wasting both computation and memory resources.

Memory view objects as known in certain programming languages like Python (e.g., numpy views on arrays) provide access to the internal data of external objects directly through buffer protocols without the need for intermediate copies. Wrapper objects are created around the buffer interface to afford the programmer with an easy way of accessing the underlying data.

However, the buffer structures underlying those memory view objects must be allocated as fixed-size contiguous blocks of computer memory, which often leads to buffer overflow and underflow issues if the amount of data that needs buffering is not known in advance. The creation and sharing of large buffer structures is even more challenging in distributed or disaggregated computer memory architectures and/or multi-node computing systems in which several processes try accessing the buffer structures in parallel. Moreover, access to the underlying data through buffer interfaces lacks flexibility and the programmer's ability to read or manipulate portions of the buffered data is rather limited.

Therefore, there is a need to provide versatile but efficient global access to data that is present in a distributed computer memory.

### Summary of the invention

It is an object of embodiments of the present invention to overcome the above-mentioned disadvantages.

The above objective is accomplished by a method, device and computer program product according to the present invention.

In a first aspect, the present invention relates to a computer memory access method. The method comprises organizing data to be accessed in the computer memory as application objects. A unique object identifier is assigned to each application object residing in the computer memory. Logical addresses of data elements included in the application object have corresponding physical addresses in the computer memory. The method further comprises providing a view on at least one of the application objects present in the computer memory. The view includes a view definition which is expressive of a selection of data elements from one or multiple referenced application objects. The data elements expressed by the view are linearly addressable by any requesting compute core. That is, one or multiple computer cores linearly address the data elements of the selection of data elements described by the view through respective offsets when requesting access thereto. Here, each offset (parameter) acts as a logical address and identifies an individual one of the data elements selected by the view, e.g. points to individual data elements in a linear representation (e.g. linear array representation) of the selection of data elements obtained upon materialization of the view (e.g. executing the view definition included in the compiled view on hardware to turn a description of selected data elements into a physical realization of the selected data elements). Expressed in other words, the offset or logical address serves to index the different data elements expressed by a view and the corresponding view object. The method further comprises compiling the view into a linked sequence of machine instructions, thereby obtaining a compiled view. The linked sequence includes at least one machine instruction. Furthermore, the method comprises storing the compiled view in a view table and assigning a view tag to each row of the view table. Each row of the view table contains a corresponding machine instruction of the linked sequence of machine instructions and each but the last one machine instruction of the linked sequence of machine instructions includes the view tag corresponding to the next machine instruction of the linked sequence of machine instructions as a reference to that next machine instruction. In response to a compute core request for a selected data element expressed through the view, the method is locating and executing the compiled view that is stored in the view table. Execution of the compiled view causes the logical address for and the application object containing the requested data element to be determined. The offset for the requested data element within the view, i.e. within the linear sequence or array of selected data elements, is included in the compute core request and applied as an input when the compiled view is executed. The method then proceeds with the steps of calculating the physical address which corresponds to the logical address of the requested data element and accessing the computer memory at the physical address of the requested data element. This retrieves the requested data element from the computer memory. The physical address is calculated as a function of the previously determined logical address if the logical address is including the unique object identifier or else is calculated as a function of the logical address and the unique object identifier of the application object that contains the requested data element.

In embodiments, the method may further comprise the steps of indicating a terminal condition in the last one machine instruction of the linked sequence of machine instructions when compiling the view and, for compiled views comprising more than one machine instruction, iteratively executing one machine instruction of the linked sequence of machine instructions at a time until the terminal condition is met. Each iterated execution of one of machine instructions of the linked sequence of machine instructions comprises:
obtaining a new offset as the previously determined logical address,
executing the machine instruction, using the new offset as input, to redetermine the logical address for the requested data element and, at least if the terminal condition is met, redetermine the application object containing the requested data element,
retrieving the view tag corresponding to the next machine instruction of the linked sequence of machine instructions to be executed and selecting the row of the view table that matches said view tag if the terminal condition is not met, and
outputting the logical address for the requested data element and the unique object identifier for the application object containing the requested data element if the terminal condition is met.

Some machine instructions may apply the identity transformation to redetermine the logical address or perform auxiliary operations such as a Boolean check that do not alter the logical address. In such cases the previously determined logical address may simply be forwarded.

This allows an efficient calculation and/or look-up of the logical addresses of the requested data elements in the underlying application object in the case of composition of views or recursive view definitions. The requesting compute core indirectly references the data element as selected by the view when initially providing the offset of the requested data element within the view as an indirect memory address.

In embodiments of the invention, a single view or view definition may be compiled into several subsequent machine instructions that occupy several rows of the view table. Hence, there can be a one-to-one or a one-to-many relationship between views/view definitions and rows of the view table.

In embodiments, the method may further comprise:
for tasks to be executed by the at least one computer core, identifying views that are input or output arguments of said tasks and compiling and storing said views in the view table at runtime, and
communicating view tag information indicative of a location of each compiled view in the view table to the at least one compute core,
wherein locating one of the compiled views in response to the compute core request comprises selecting the view table row that matches view tag information included in the compute core request.

In embodiments, the method may further comprise:
organizing data to be accessed in the computer memory as first application objects having a metadata chunk and a data chunk, each first application object comprising a view definition of the empty type in said metadata chunk and data elements for computation by one or more computer cores in said data chunk, said data elements in the data chunk being indirectly accessible by the one or more compute cores through one or more intervening views,
organizing and storing views as second application objects in the computer memory, each second application object having a metadata chunk and an empty or non-existing data chunk and comprising a view definition of a different view type than the empty type in said metadata chunk.

In embodiments, views of a base view type may include a reference to a first application object in the corresponding view definitions. Recursively defined views may include a reference to at least one other view in the corresponding view definitions. This allows composing complex views from simpler views.

In embodiments, the data elements of the first application objects selectable through views may represent user data structures comprising at least one of: vector, tensor, and sparse matrix. This enables efficient representation of common data structures.

In embodiments, the metadata chunk of each first application object residing in the computer memory may further comprise data type information about the data elements contained in the data chunk of that first application object, and the method may further comprise the steps of:
fetching the data type information from the metadata chunk of a referenced one of the first application objects (i.e., referenced by a view) stored in the computer memory,
extracting a byte size of data elements contained in the data chunk of the referenced application object from the data type information,
for a view operating on the referenced first application object, calculating the offset of a selected data element of the referenced first application object as a function of a position index and the byte size.

In embodiments, each first application object residing in the computer memory may further have a user data chunk for holding data format information about the data elements contained in the data chunk of the first application object, and the method may further comprise:
fetching the data format information from the user data chunk of a referenced one of the first application objects (i.e., referenced by a view) stored in the computer memory,
extracting data bounds from the data format information,
for a view operating on the referenced first application object, verifying that the offset of a selected data element of the referenced first application object lies within the data bounds.

This enables validating data element offsets against the data format information.

In embodiments, each second application object residing in the computer memory may further comprise a user data chunk for holding data format information about the data elements expressed by its view definition.

In embodiments, the method may further comprise flattening or reducing composite views including a reference to at least one other view in the corresponding view definitions, by replacing said reference to said at least one other view with the view definition that is included in said at least one other view. This simplifies recursive view definitions and view definitions pertaining to compositions of views.

In embodiments, the method may further comprise simplifying composite views including a reference to at least one other view in the corresponding view definitions when compiling the composite views, by transforming views operating on other views into views operating on objects referenced by said other views in accordance with predetermined transformation rules. This optimizes the compiled views.

In embodiments, storage locations for data elements of each application object may be distributed uniformly across a physical address space associated with the computer memory. This improves memory access performance in distributed computer architectures, computing platforms or environments.

In embodiments, the computer memory may be a distributed and/or disaggregated computer memory. This improves modularity and scaling potential of the computer memory and adapts it to the needs of decentralized computing systems. Furthermore, the computer memory may be a shared global computer memory. This allows application objects as a shared resource in computer memory, accessible to all the compute nodes of the computing system that comprises the computer memory. In embodiments, the computer memory may be a random-access memory.

In embodiments, each view may have a view type associated therewith, there being at least a base view type for selecting a group of consecutive data elements from a referenced application object. Additionally, one or more of the following view types may optionally be provided: a stride view type for periodically selecting different groups of consecutive data elements from a referenced application object, a weave view type for repeatedly selecting and interleaving different groups of consecutive data elements originating from two different referenced application objects, an indirect view type for selecting data elements from a referenced application object based on a set of selection indices.

In embodiments of the invention that include views of the weave view type, the compilation step may generate machine instructions that cause the view execution hardware to carry out a conditional check, e.g. a conditional check on the offset that is an additional operand during the execution stage of the machine instructions, to decide between two possible choices for the view tag corresponding to the next machine instruction of the linked sequence and/or decide between two possible choices for the underlying application object that are indirectly referenced by the weave view definition.

In embodiments, each view definition may describe a linear operation or a group of linear operations on logical address spaces for the logical memories associated with the referenced application objects or may specify a set of indices for selecting one or multiple logical addresses within said logical address spaces.

In embodiments, the method may further comprise the step of managing the view table in a control or instruction memory operatively coupled to a view execution unit adapted to execute machine instructions of compiled views.

In embodiments, the view definition may correspond to a formatted list of view parameters.

In embodiments, the view tag information included in the compute core request may identify the first machine instruction of the linked sequence of machine instructions corresponding to the compiled view.

In embodiments, the logical address of data elements in the logical memory of application objects may correspond to an offset, or a combination of chunk identifier and relative offset within the chunk.

In embodiments, the method may further comprise the step of performing a memory access operation at the physical address in the computer memory in accordance with a memory command specified by the compute core request.

In embodiments, calculating the physical address of the requested data element may comprise evaluating a hash function that uses the logical address of the requested data element and the object identifier as hash keys.

In embodiments, the second application objects may correspond to view objects which encapsulate the view definitions. The view objects are referenced by the assigned unique object identifier.

In embodiments, application objects (e.g. first and second application objects) may be logically portioned into chunks and stored as one or multiple independent memory objects in the computer memory, e.g. one memory object per chunk, accessible through the chunk number or index of the application object. A memory object refers to a collection of data elements or data fragments, residing in physical computer main memory, which are accessible to compute cores by virtue of the same unique object identifier but generally stored in non-adjacent disparate blocks in physical memory, e.g. distributed across the computer main memory such as a disaggregated computer main memory globally accessible by compute cores of different compute nodes. Different data elements or memory object fragments within a same memory object are referenceable through corresponding different offsets, e.g., absolute offset within the object, or relative offset in combination with base address or chunk index). As such, memory objects provide a way of organizing and accessing data in the computer memory. Memory objects may or may not include a metadata portion, whereas application objects always do.

In embodiments, the method may further comprise the step of generating application objects (e.g. first and second application objects) pertaining to a computer program at runtime while executing the computer program. Dynamic object creation and task scheduling is beneficial for workload balancing in applications that suffer from irregular workloads. The application objects may be transient objects in the computer memory. This avoids persistence beyond the program execution.

In embodiments, managing the view table in a control or instruction memory may include filling and clearing entries in the view table. In embodiments, the view table may be stored in a memory unit that is private to a task management unit or task managing process. In embodiments, the method may further comprise the step of fetching metadata of application objects into the memory unit that is private to the task management unit or the task managing process, prior to compiling views depending on said metadata.

In embodiments, the method may further comprise the step of calculating the selection indices for views of the indirect view type.

In embodiments, the method may further comprise the step of writing or reading values of requested data elements to or from a scratchpad memory or compute core register file. In embodiments, the method may further comprise the step of materializing the compiled view in a scratchpad memory in proximity to the at least one compute core or in a compute core register file.

In embodiments, the method may further comprise the step of materializing the compiled view by repeatedly executing the linked sequence of machine instructions related to the compiled view to successively access each data element of the selection of data elements expressed by the compiled view. The offset that is input to each repeated execution of the linked sequence of machine instructions is incremented by an element size associated with the selected data elements after each repeated execution.

In a second aspect, the present invention relates to a computer comprising:
a computer memory for storing application objects containing data elements, each application object being assigned a unique object identifier,
at least one compute node coupled to the computer memory, each compute node comprising: at least one compute core for processing data elements contained in the application objects; a node-local memory unit adapted to hold a view table; a view execution unit configured to execute machine instructions present in the view table, wherein each compute node of the computer is configured to perform the method steps of any one of the embodiments of the first aspect.

In embodiments, the computer may comprise a plurality of compute nodes and a communication network interconnecting the plurality of computer nodes. The computer memory may be provided as a distributed computer memory and configured to act as a globally shared computer memory for the plurality of compute nodes.

In embodiments, each compute node may further comprise a task management unit configured to: schedule tasks for execution by the at least one compute core; compile views that are inputs or outputs to said tasks; store compiled views in the view table; manage view table entries and access to the view table.

In embodiments, the view execution units may be microcode co-processors associated with the compute cores of the respective compute node. In embodiments, the view execution unit of each compute node may comprise different functional subunits and machine instructions present in the view table may include information that specify the functional subunit of the view execution unit to be selected for execution.

In embodiments, the computer may be a supercomputer, high-performance computing system, grid computer or cluster computer.

In embodiments, each compute node may further comprise a memory object management unit configured to calculate the physical addresses of data element selections expressed by views.

It is an advantage of embodiments of the present invention that views on application objects in computer memory can be efficiently compiled into machine-executable instructions and stored in a view table for fast access and execution by dedicated view execution hardware.

It is a further advantage of embodiments of the present invention that the compiled versions of complex and/or nested views stored in the view table can be executed iteratively to determine the logical addresses of data elements selected from application objects, enabling efficient materialization of these views.

It is an advantage of embodiments of the present invention that views used as inputs or outputs of tasks can be dynamically compiled and stored in the view table at runtime, allowing flexible and efficient access to application object data by compute cores executing the tasks, without having to create and transfer unnecessary copies of the application object data and without having to rely on runtime-specific buffer interfaces. Unnecessary copies of the application object data may occur in the absence of views when repeated selections of data elements out of a larger data set requires the creation of node-local or temporary copies of the larger data set during each selection process. Contrarily, using views to assemble application objects by reference to other objects (e.g. at runtime) can advantageously reduce the amount of time expensive copying that needs to be done to bring into existence such application objects and use them as task arguments.

It is a further advantage of embodiments of the present invention that application objects can be organized with metadata, user data and (raw) data chunks, with views indirectly referencing the data to provide secure and controlled access. The metadata chunk can be securely accessed by hardware but access to the metadata preferably is denied to the end users. This also allows the controlled manipulation and stepwise creation of application objects such as view objects, in which information about data format and/or structure is entered into the user data chunk before the actual view type and view definition is entered into the metadata chunk. This enables the division of work into smaller work units, handled by different tasks, thereby further improving performance.

It is an advantage of embodiments of the present invention that various standard view types can be defined, such as base, stride, weave, and indirect views, enabling efficient and versatile selection of data elements from application objects by the end user. Standard or built-in type views can be combined or composed to obtain more complex and/or user-specific views on data present in the application objects.

It is a further advantage of embodiments of the present invention that composite views referencing other views can be flattened or simplified during compilation to optimize the compiled machine instructions.

It is an advantage of embodiments of the present invention that the computer memory can be configured as a distributed shared global memory accessible by multiple compute nodes, with data elements of each application object distributed uniformly across the memory's physical address space.

It is a further advantage of embodiments of the present invention that a task management unit on each compute node can schedule tasks, compile their input/output views, manage the view table, and provide view tag information to the compute cores for efficient view-based data access.

Embodiments of the invention have the advantage of accessing data elements of application objects stored in a computer memory efficiently through views. Data such as user-provided data can be organized efficiently in the computer memory and data selections can be represented compactly.

In accordance with embodiments of the invention, views may materialize directly in the register files of the compute core(s) of the different compute nodes. This means that the outputs of a view definition undergoing execution, e.g. the data elements of a targeted data subset, can be generated on the fly and typically become available directly in the core registers and are usually too short-lived to be transferred to the computer main memory (although this latter case may still occur in some specific situations and/or compute core architectures, such as during persistent materialization of view objects or context switching). Alternatively, the view outputs may materialize in a fast memory in proximity to the one or more compute cores of the different compute nodes, for instance in a scratchpad memory close to the one or more cores and possibly shared or commonly used by several cores.

If not transferred into the transient computer (main) memory, the ephemerally materialized views are consumed almost instantly and are not assigned a unique object identifier. Nonetheless, the outputs of executed view definitions may be stored in a data output object, which represents the persistently materialized view, and assigned the same unique object identifier as the persistently materialized view object, which can be advantageous in some embodiments of the invention in which a particular view has to be executed several times during program execution and/or where multiple compute cores request data elements relating to the same view at different moments in time. In such cases, the persistently materialized view object may be held in an object cache of the compute node or written back to the computer main memory, e.g. a shared global computer memory, whereby repeated address calculations and memory accesses with respect to the computer main memory can be avoided. Instead of executing the (complex) view definition, future memory accesses regarding the date selection can directly be answered by reading parts of the persistently materialized view object - being a data object - from the global storage/computer memory. The computing system or runtime hardware unit managing the execution of the views can initiate this materialization operation at any time in orderto increase performance. For example, a frequently accessed selection of data expressed by a view object or passing a threshold for the number of accesses may trigger the persistent materialization of the view object as an optimization step. Maintaining the same unique object identifier has the advantage that tasks pointing to that persistently materialized view object as arguments of the task do not have to be redone. Compute node object caches can be software-managed cache memories or hardware-implemented cache memories and may be part of a memory subsystem of a hierarchically organized computer memory. If one compute node initiates the persistent materialization of a view object that is globally available in the shared computer memory and some other compute node is still storing a node-local copy of the view object in one of its object caches, the change in the metadata of the persistently materialized view object will not affect the data selection that the view object expresses. The other compute node thus may safely continue to access data elements of the data selection represented by the view as if the view object had not yet been materialized, i.e. continue to execute its own node-local copy of the view definition originally contained in the view object's metadata chunk. Once this information falls out of the object cache of said other compute node, a subsequent request to fetch the metadata on this other compute node will show that the view object has been transformed into a corresponding data object. Furthermore, an end programmer may still be given the possibility to make a task that reads data from computer memory through a view and create a new data object as an explicit copy that stores that data.

In embodiments of the invention, the desired subset of data elements is referenced indirectly through the corresponding view definition (recursive or non-recursive). This means that a logical address for each data element of the targeted subset is in general not directly available to the compute cores (e.g., not residing in the core registers or accessible in an instruction address field) but can be obtained indirectly by reference to the corresponding view object, e.g. through calculation or lookup of the simple or extended logical address upon execution of the view definition contained in the referenced view object. Therefore, only the simple or extended logical addresses of data elements of the desired selection of data elements are generated during the execution of a view definition, thus avoiding the generation, transfer and storage of useless address information. In embodiments of the invention, the data elements are stored in the transient shared global computer memory at a location that is accessible through a physical address. Hence, the extended logical address obtained from view execution, or a combination of the obtained simple logical address and the object identifier (OID) of the underlying application object residing in the computer memory, are used as inputs to a deterministic function that computes the corresponding physical address of the referenced data elements within a selected subset.

In embodiments of the invention, view definitions may be recursive, e.g., when implying or including a reference to another view definition. Recursively defined views include composition of views (e.g., views on views), also referred to as nested views. This has the advantage that users can express data selections from underlying data objects in the computer memory that are more complex and yet described and stored in a compact manner. The composition of views, e.g. using standard built-in view definitions, makes views a flexible versatile tool for online data selection from a variety of user-provided inputs, e.g. user-provided data structures like vectors, matrices, tensors, time series, graphs, etc., without added costs due to copying.

In embodiments of the invention, view definitions are preferably stored as a list of view parameters. The parameters of the list can be easily stored in a linear manner (sequence of memory object fragments, consecutive in the view/application object's associated linear memory space) in the metadata chunk of the view object. Nested views can be represented as lists of lists of view parameters, which are preferably flattened into a single, extended list of view parameters for storage in the view object's metadata chunk. In the single, flattened list obtained with respect to a nested view definition, the view parameters pertaining to each individual view (e.g. level of recursion) can still be identified by means of a view type code and corresponding storage length of the view in the logical memory space associated with the view object that is stored in the computer memory, e.g. distributed and/or shared global computer memory.

Particular and preferred aspects of the invention are set out in the accompanying independent and dependent claims. For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein. The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 shows a distributed computing system adapted to carry out memory access methods in accordance with embodiments of the invention.
FIG. 2 illustrates how an application object is stored in multiple locations of a distributed computer memory which is part of a distributed computing system.
FIG. 3 to FIG. 7 explain the selection mechanism afforded by various types of memory views in accordance with embodiments of the invention.
FIG. 8 illustrates submatrix selection in accordance with specific embodiments of the invention, using a stride view operation on the data elements of a larger matrix.
FIG. 9 illustrates various examples of index range selection in accordance with specific embodiments of the invention, using different stride view operations.
FIG. 10 and FIG. 11 explain how different types of user-provided data structures are mapped to corresponding types of application objects.
FIG. 12 is a block diagram illustrating a reduction mechanism which can be applied to sequences of view definitions in embodiments of the invention.
FIG. 13 further illustrates the differences between a view object, an indirectly referenced application object, and the materialization of the view object upon execution of its view definition.
FIG. 14 shows entries of a view table in accordance with an embodiment of the invention.
FIG. 15 is a block diagram visualizing information exchange between hardware components performing the computer memory access method in accordance with embodiments of the invention.
FIG. 16 is a flow diagram illustrating steps of the computer memory access method in accordance with embodiments of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention. Furthermore, while some embodiments described herein include some, but not other features included in other embodiments, combinations of features of different embodiments are meant to be within the scope of the invention, and form different embodiments, as would be understood by those in the art.

In the description provided herein, numerous specific details are set forth. However, it is understood that embodiments of the invention may be practiced without these specific details. In other instances, well-known methods, structures and techniques have not been shown in detail in order not to obscure an understanding of this description.

In the context of the present invention, a "view" or "memory view" on a data-containing object in computer memory, i.e. a data memory object or data object for brevity, refers to a selection of data elements from a larger set of data elements composing the data part (i.e. data chunk) of the data object. Views provide an efficient way of making the data element selections accessible to the user/user code without requiring a copy of the underlying data that has been selected. Moreover, a view can operate on multiple different data objects and even on other views, which enables an efficient and flexible way of combining data elements selected from multiple data objects and/or composing data selection processes. This also enables the user to express data element selections with respect to a previously obtained data element selection rather than relative to the original data object. The former is often much easier to describe than the latter.

The term "view operation" or "memory view operation" is sometimes used interchangeably with the term "view" but emphasizes the selection process that leads to the desired selection of data elements.

The term "view definition" or "memory view definition" refers to a data format or data structure that describes the intended view operation through a set view parameter. The view definition represents the intended view operation in a compact and structured manner, e.g. by way of a collection of view parameters organized according to prescribed format or as a list of ordered view parameters. A view definition can be non-recursive, i.e. not referring to another view definition, or recursive, i.e. referring to at least one further view definition, e.g. through a list of lists of view parameters (nested lists) which can be flattened into an extended, simple list. References within a view definition are either to other view definitions (derived views) or to actual data objects through their OlD (simple or prototypical view). A view definition provides view parameters in a format that is self-contained and accepted and understood by a compiler, which is adapted to translate view definitions into machine-executable code for view execution. Here, self-contained means that except for the prior specification of the format, no additional explanatory information must be provided to interpret and execute the view definitions.

A view definition can be plain/simple or recursive/nested. Plain definitions are operating directly on a referenced first application object (e.g., a base view), whereas nested view definitions are operating indirectly on referenced first application objects through view definitions associated with other, intervening views (e.g. composite views, typically involving a base view).

A "view object" or "memory view object", in embodiments of the present invention, refers to a container for view definitions that can be stored as a memory object in the computer memory, e.g. a distributed and/or global shared computer memory. View objects thus store information about selected data elements of an underlying, previously created data object without storing the actual data. Instead, data address information and data address operations with respect to the data elements of interest are encoded in the respective view definitions in a compact manner, which result in the selection of the data elements when the view definition is executed on view execution hardware, e.g. hardware units for or assisting in the generation and calculation of addresses for data elements. These addresses correspond to logical addresses associated with a linearly addressable logical memory space associated with and private to each memory object (which includes data objects). For each data element in the per-object logical memory space, a corresponding physical address in the distributed computer memory can be calculated as a deterministic function of the object's unique identifier and the offset of the data element in the object's logical memory space. The data element is physically stored in the computer memory at the calculated physical address but is accessed by the processing elements (e.g. compute cores) of the computer through its logical address. The portion in physical computer memory that stores the accessed data element of a memory object is also referred to as a data fragment of the memory object. The deterministic function may be a hash-like function, which maps data elements that are adjacent to each other in the logical memory space to non-contiguous portions of the physical computer memory, preferably distributing data elements/data fragments of memory objects uniformly across the distributed computer memory. The calculated physical memory address for a data element may be equal to or partly correspond to a network address of a memory module that forms part of the distributed computer memory. In embodiments of the invention, the distributed computer memory may be a disaggregated computer memory, comprising a plurality of physically separate memory modules. That is, the data fragments of a memory object are typically residing in different physical locations of the computer memory, e.g. in different memory modules. The disaggregated computer memory may be a shared global computer memory, meaning that each compute node of a distributed multi-node computer, machine, computing architecture, supercomputer, computing infrastructure or computing platform, comprising or coupled to the computer memory as physical main memory, can read every location (physical address) in the computer memory, provided that the tasks executing on the respective compute nodes have been given sufficient privileges to access the data fragment of a memory object stored in this location and are in possession of the memory object's unique identifier. Memory modules composing the disaggregated, shared global computer memory may be located on compute nodes, i.e. co-located with processing elements (e.g. compute cores) of the compute nodes, or may be provided as separate memory nodes, or combinations of both. In embodiments of the inventions, the compute cores of the different compute nodes are configured to execute user program (code) at the application level. That is, each compute core is configured to receive execute instructions related to a user program, which may be assigned to different tasks, access or request access to data elements of objects present in the computer memory in accordance with the received instructions and perform computations on the accessed data element in accordance with the received instructions. The compute cores access the data elements through their corresponding memory object, e.g. by specifying an object identifier and the logical address/offset in the logical memory space associated with the identified object for each data element for which access is requested. Address calculation hardware units as specialized functional units may assist the compute cores in the calculation and generation of data element addresses ahead of time, i.e. prior to the consumption of the data element by the compute core and/or as part of a pre-fetching process. An address calculation unit may be associated with each compute core, e.g. integrated into the compute core or be in close proximity and coupled to the compute core, or each group of compute cores, e.g. in close proximity and coupled to the compute core group.

As any other memory object, a view object is a transient or online entity that exists ephemerally in the computer memory during the period of time that a user program (code) needs to execute on the distributed and multi-node computer, machine, computing architecture, supercomputer, computing infrastructure or computing platform comprising or coupled to the computer memory as physical main memory (i.e., primary computer memory, not to be confused with secondary computer memory like hard drive destined for long-term/offline storage). This does not exclude the possibility of moving or copying view objects, or any other memory object, from the (main) computer memory to secondary storage facilities like hard drive for offline storage. Moreover, a unique object identifier is assigned to a view object like to any other memory object (object residing in transient computer memory) thanks to which the view object can be identified, and its contents be addressed by the processing elements (e.g. compute cores) of the distributed and multi-node computer, machine, computing architecture, supercomputer, computing infrastructure of computing platform.

A "materialized view" or "view object" refers to the ensemble of data outputs object that are produced as the result of a view execution, e.g. the results obtained when carrying out the logical address operations such as address calculation or lookup steps that are encoded by the corresponding view definition. That is, the view materialization step leads to the determination of the logical addresses for the selection of data elements as described by the corresponding view definition/ view object and the execution of load/store commands (e.g. by a dedicated co-processor of each compute node such as a data distribution co-processor adjacent to a processor core or a group of processor cores) that access the requested data elements of the selection of data elements in the computer memory according to the determined logical addresses. For load commands, the data elements associated with a materialized view may be loaded into registers of a requesting processor core. For store commands, the data elements associated with a materialized view may be read from registers of a requesting processor core. Conversely, an "immaterialized view or view object" relates to a virtual view object that has not been or has not yet been materialized but which would yield the same targeted selection of data elements from the underlying one or more data objects if it was executed. The immaterialized view object can be thought of as an intermediate product during the execution phase of a derived view definition (referring to another view definition), which does not require the creation of a data output object in the computer memory. As data elements may be selected one at a time during the view execution (iterative process), the immaterialized/virtual view object may never fully come into existence.

In embodiments of the invention, memory views and the related view objects typically describe selections of data elements from an application object. Hereinunder, an application object refers to a particular kind of memory object, which includes or allows at least the following chunks: a metadata chunk, a user data chunk and a data chunk. Additional chunks can be included in application objects. The chunks of an application object all have a well-defined meaning that is understood by the computing system. In contrast thereto, memory objects are not restricted to specific combinations of chunks but may contain an arbitrary or limited number of unspecified chunks. Data-containing application objects, i.e. having a non-empty data chunk, are also referred to as data objects. View objects are second application objects and form a subclass of the more general application objects that describe views on data that is present in the data chunk of at least one other data object. To achieve this, view objects contain a view definition, which is typically stored in the metadata chunk of the view object. Since view objects describe data selections without storing the selected data items, the data chunk of a view object is typically omitted (not specified, by not assigning a logical base address) or left empty. Data objects, in accordance with embodiments of the invention, are first application objects and usually do not contain a view definition or contain a view definition of a special 'empty' type (empty view, no view) indicating that the application object is to be treated as a data object instead of a view object.

Application objects may have empty data chunks, e.g. view objects or application objects that have been created but have not yet received computer program task output data. Moreover, the different chunks of an application object as understood in embodiments of the invention may themselves be organized and stored as individual memory objects in the transient shared global computer memory. In this case, the different memory objects that are associated with a common application object are assembled into the common application object by including references to their respective object identifiers (OIDs). It is then in the context of the application object that the referenced memory objects are interpreted as chunks with a well-defined meaning. The logical base addresses for each chunk of an application object can be derived from the OlD of the application object. Assembling the different chunks of an application object by reference to the underlying memory objects has the advantage that time and resource-inefficient copying of already available information can be avoided. This is precisely what views/view objects accomplish. The resource-friendliness of view objects is due to the fact that other chunks than the data chunk typically contain only tiny pieces of information.

A "machine instruction", in embodiments of the present invention, refers to a computational instruction that is understood and executable by the relevant hardware units. Complex or higher-level computational instructions may be simplified, translated, decoded or decomposed into a series of simple or lower-level instructions as part of the execution process. The computational instructions are presented in a form that is allowed and supported by the relevant execution hardware units.

Embodiments of the invention relate to a method of accessing application objects in a distributed computer memory. Methods in accordance with embodiments of the invention have the advantages of improving the utilization of the memory resources available in the distributed computer memory and improving memory latency. Organizing data elements as application objects in the computer's main (working) memory and exposing the contents of application objects as memory view objects to the processor cores of the distributed multi-node compute architecture further improves the security (information integrity and protection, e.g. from other users or system processes) of the underlying data, yields memory safety benefits, and facilitates the access to application objects in computer memory through multiple independent views when these application objects are shared resources. Independent view objects referencing the same application object in the computer memory do not require any form of synchronization. View objects are versatile, allow the definition of user-specific data access patterns and support recursively defined selections of data elements and/or the combinations of such selections. The application data objects may be differentiated by their type and represent user-provided data structures efficiently. It is an advantage of embodiments of the invention that view objects can be applied to many different types of application objects that reflect differently structured user input data.

Moreover, view objects and view definitions enable the loading of the desired application object data just in time or ahead of time, so that the desired data is made available to the compute cores almost instantaneously. Importantly, only the desired data is loaded as part of a selection of data elements for which the addresses have been expressed, described or encoded in the corresponding view definition. That is, only data on which views are defined will be loaded to the processor core registers or a fast scratchpad memory close to the processor cores, whereas data not encompassed by the views may stay in the transient shared global computer memory, or even on a permanent secondary memory, and is not unnecessarily transferred to the processor cores. A software or hardware prefetcher may be configured to load the desired data ahead of time. Upon execution of the view definition on dedicated hardware, the addresses for the selected data elements of one or multiple application objects are effectively calculated. Therefore, only data of application objects that is relevant for computations by the compute cores is prepared and moved closer to the respective compute core. When tasks are scheduled for execution and before being mapped to a particular execution hardware unit, e.g. compute core or a functional unit thereof, the objects for input and output are declared in their argument list. Using view objects for task inputs, and possibly also task outputs, thus allows an execution of their associated view definitions ahead of time.

Dedicated data distribution (co-) processors may be provided in proximity to a compute core or compute core group/cluster, each of which comprises an address calculation hardware unit configured to calculate the logical addresses for a selection of data elements within one or more (directly or indirectly) referenced application objects as defined by a view object. The logical addresses are transformed by memory object management units of the different compute nodes into corresponding physical addresses of the distributed computer memory, wherein each memory object management unit is configured to calculate the physical addresses deterministically as described hereinabove. Each of the dedicated data distribution (co-) processors may be operatively coupled between a respective one of the compute cores or core clusters and the distributed computer memory (main memory, globally shared). This way, each data distribution processor may be further configured to load and/or store data elements of application objects referenced in a view object on behalf of the corresponding compute cores/core clusters, which are adapted to dispatch incoming memory request operations to one of the operatively connected data distribution (co-) processors. Furthermore, each data distribution (co-) processor may be configured to read/write information to the metadata chunks of application objects that are referenced within a view object.

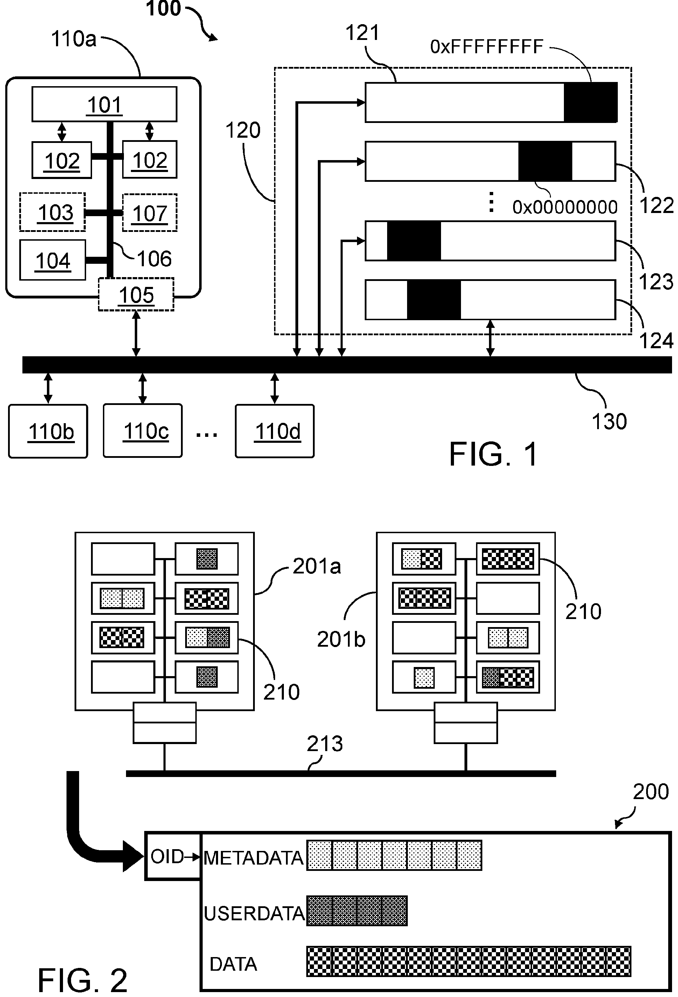

Referring now to FIG. 1, a distributed computing system implementing access methods in accordance with an embodiment of the invention is shown. The distributed computing system 100 comprises a plurality of distinct compute nodes 110a-d and a globally accessible, shared computer memory 120. An interconnect network 130, e.g. a public or private communication network, mutually connects the individual computed nodes 110a-d with each other and connects each one of the compute nodes 110a-d to the shared computer memory 120. The computer memory 120 may be a distributed computer memory, comprising or consisting of a plurality of memory nodes 121 to 124, each containing a network interface and a memory module with memory controller (not shown). A unique network address is assigned to each addressable end node of the cluster-wide network 130, including the compute nodes 110a-d and the memory nodes 121 to 124. In general, the compute nodes are assembled hardware units that form the building blocks for massively scaled distributed computing systems like supercomputers or grid computers.

A typical compute node 110a comprises one or more compute cores 101, which may form a cluster, one or more dedicated data distribution co-processors 102 that are operatively coupled to compute cores 101, an optional node-local object cache memory unit 103, a memory object management unit, hereinunder referred to as MOMU 104, a network interface unit 105, a node-local communication network 106, and a runtime management (RTM) unit 107. The intra-node network 106, e.g. a network on a chip (NoC) or system bus, communicatively interconnects and allows message exchange between the compute cores 101, the data distribution processors 102, the object cache memory unit 103, the MOMU 104 and the network interface unit 105. The network interface unit 105, e.g. a cluster network interface, couples the compute node 110a to the inter-node, system-wide communication network 130 and manages the data traffic from and to the compute node 110a.

The compute cores 101 may be any register-based processor core with RISC, CISC or VLIW-type architecture as known in the art. A typical compute core comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc. The compute cores 101 access memory object (data) fragments either directly from the object cache memory unit 103, or via a higher-bandwidth scratchpad memory (not shown). Memory object fragments held in object cache memory unit 103 can be transferred on to the faster scratchpad memory prior to consumption by the compute cores. Memory objects fragments for consumption by the compute cores 101 preferably are prefetched from the distributed computer memory 120 and placed into the object cache memory unit 103.

The dedicated data distribution processor(s) 102 may be configured to perform load-store operations on behalf of the compute cores 101, which allows the compute cores 101 to spend more computation effort on actual data processing. Although the cores 101 of a compute node can, in principle, reference individual fragments of application objects for computational tasks, it is more efficient for the cores to access and consume contents from linear data spaces, e.g. vectors of data in the strict sense or sequential instructions (e.g. as generated by the compiler). Therefore, data distribution processor(s) 102 in accordance with embodiments of the invention may perform data formatting processes, which assemble the requested fragments of a referenced application object that have been accessed through view objects. This greatly enhances data utilization by the one or more cores 101 of the compute node 110a. Data fragments can be extracted out of an application object present in the computer memory 120 according to view definitions that are encapsulated in the view objects. The view objects themselves may be transiently stored in the computer memory 120 and fetched therefrom whenever its view definition needs to be executed by the dedicated data distribution processors 102. A particular view of an application object may be generated by reordering and/or vectorizing a subset of selected fragments contained in the original application object such that the core(s) can consume the prepared views in a linear fashion. This means that the compute cores can consume the materialized view objects as soon as they become available, e.g. within the core register files or in a scratchpad memory close to the cores. The different compute cores operate on the results of an executed view but not on the view objects themselves. In embodiments of the invention, different computer cores may consume different parts of a materialized view. This means that a materialized view can be distributed among different processing cores. Furthermore, data elements may be consumed as vectors by compute cores capable of executing vector-like instructions on multiple operands in parallel.

A typical situation that benefits from the reordering and/or vectorization of data fragments is the access of elements of an array, in which the access follows a particular pattern (e.g. slicing or using a specific stride parameter). The preparation of suitable views for the respective cores 101 by each of the data distribution processors 102 may be optimized by a compiler at compile time. Until being consumed by the core(s), individual memory object fragments, or views that are generated from accessed memory objects, may be placed temporarily into a scratchpad memory or register file of the core(s). More generally, cores of the compute node can execute compute tasks with respect to any memory object; different memory objects being distinguished through different addresses at the core level (e.g. the OlD is part of the address at core level).

MOMU 104 is configured to calculate the physical memory addresses for memory object fragments present in the distributed computer memory 120, when memory access has been requested by the compute cores 101 or the data distribution processors 102. A portion of the physical memory addresses calculated by the MOMU 104 within each compute node, e.g. a bit field of predetermined length, preferably corresponds to the unique network address of one the computer memory nodes 121 to 124. The fragments of a single memory object are scattered across the physical computer memory modules 121 through 124 and shown therein as black regions.

MOMU 104 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses using page tables. Page table entries may be partly held in private memory of the MMU or a translation lookaside buffer (TLB), operatively coupled to the MMU, may assist the MMU with the address translation task. TLB misses cause the CPU or the operating system to start a page walking process in which page table entries are retrieved from main memory. The conventional MMU is also responsible for raising page fault exceptions in the event that no page table entry is found in main memory with respect to the virtual memory address currently being translated. A conventional MMU thus spends considerable amounts of time and energy to perform address translations by lookup operations in page tables.

In contrast thereto, the memory object management unit (MOMU) 104 in accordance with embodiments of the present invention is configured to derive the physical memory address corresponding to the memory object fragment that is requested by one of the cores 101 or data distribution processors 102 by way of calculation. More specifically, the MOMU 104 calculates the physical memory address as a deterministic function whose arguments are the offset of the requested fragment in the logical memory space of the corresponding memory object and its OID. In preferred embodiments of the invention, the MOMU calculates the physical memory addresses according to a hash function. Therefore, no lookup operations for page table entries are necessary, page tables do not have to be maintained in computer memory and page fault exceptions never occur. Interventions of an operating system that deals with paging-related interrupts or exceptions are unnecessary in embodiments of the invention.

In preferred embodiments of the invention, a portion of the calculated physical address, e.g. the k most significant bits, directly forms a corresponding network address for one the memory modules 121 to 124, whereas the least significant bits can be used by a local memory controller of the receiving memory module to determine the location in the local memory that has been attributed to the memory module. Alternatively, a network address for the physical address can be obtained by calculation or via a lookup table.

In preferred embodiments of the invention, the MOMU calculates the physical memory addresses according to a hash function - the shared computer memory 120 is then configured as a distributed hash table, such that each object fragment in the globally shared computer memory 120 corresponds to a stored value of the distributed hash table and a physical memory address of the object fragment corresponds to an input key for querying the distributed hash table. Hence, no lookup operations for page table entries are necessary, page tables do not have to be maintained in computer memory and page fault exceptions never occur.

In contrast to conventional compute architectures, information stored in the framework of memory objects does not have to undergo a lengthy search. When information is fetched from a remote node in traditional implementations of multi-node compute clusters, the requesting node first checks all its cache levels before the operating system is queried, sends a message to the remote node, retrieves the requested data and finally hands it over to the requesting node. In embodiments of the invention, the information retrieval process across the distributed computing system is simplified, because the MOMU of the requesting compute node can exactly locate the requested piece of information in memory through a calculation of the physical memory address. A network packet can then be issued directly to the distributed memory controller whose store unit holds the information. Hence, neither the operating system nor a central database is involved in the information retrieval, whereby resources and latency related to information access are significantly reduced. Nonetheless, the MOMU of compute nodes in accordance with embodiments of the invention may first try to retrieve data elements of a desired subset from node-level object caches that can hold frequently used memory objects or parts thereof. For instance, data elements of an underlying application object that result from a view execution may be temporarily stored in the node-level object caches if they are requested multiple times or accessed by several different compute cores. If the node-level object caches cannot serve the memory request, e.g. do not hold the requested data elements pertaining to a materialized view or previously materialized view, the MOMU of the respective compute nodes redirect the memory request to the shared global memory.

In embodiments of the invention, stored fragments of each individual memory object are usually scattered over the whole distributed, shared and globally available computer main memory 120, e.g., distributed in a random and uniform manner over the physical address space associated with the global shared computer main memory 120. FIG. 2 illustrates how the data fragments/elements of the different chunks (e.g. metadata, user data, and raw data or code) of an application object 200 are possibly distributed across the different compute nodes 210 of a distributed computing system, in which a respective portion of the computer memory, e.g. computer memory module, is co-located at or integrated into each compute node. Groups of compute nodes 210 are organized into clusters 201a, 201b and interconnected by a cluster-wide network 213.

The metadata chunk generally constitutes the first chunk of the application object, but the assignment of a different chunk number to the metadata portion of the application object is possible. In principle, the numbering or ordering convention for the different chunks belonging to application objects may be chosen arbitrarily. The (extended) logical base addresses for each chunk may be derivable directly form the application objects' unique identifier (OID) and formed as [OID:chunk index] << M, where ":" is the concatenation operator, "<<" is the binary shift operator and M represents the number of offset bits used, e.g. M = 32, 40, 64 or another number of bits. Here, the shift operator generates M zero offset bits in the base address that indicates the start of each chunk. For a K-bit wide OID, an L-bit wide chunk index and an M-bit wide offset, the extended logical address would be K+L+M bits long, e.g., K+L+M = 64 bits or 128 bits. In exemplary embodiments, the chunk index for the metadata may be "00", the chunk index for raw data may be "01", etc. In other embodiments, the chunk index for the raw data may be "00", the chunk index for metadata may be "01", etc.

Alternatively, the metadata portion of each application object may comprise information on the number and respective base addresses of each additional chunk in the logical address space associated with the application (memory) object. In this case, the logical base address of the metadata chunk is preferably derivable from the OID.

Moreover, the in-memory size (e.g. byte length) of the individual data elements within the data chunk, the data type (e.g. int16, int32, float64, char, bool, etc.), security attributes which govern the access privileges to all or parts of the chunks, etc., are preferably included in the metadata portion of each application object. In view objects, the metadata chunk also includes a view definition that directly or indirectly refers to the data chunk of at least one other application object, e.g. contains a description of a view on the data within the data chunks of one or multiple data objects.

The metadata chunk may be followed by the user data chunk (in terms of a base address order for the chunks as logical partitions of the logical address space associated with the application object), which contains information regarding the structure of the data set whose elements are stored in the data chunk in a linear fashion. Of course, the linear storage of the data elements only applies to the core-side representation of the memory object as a very large block of logical memory, but not to the memory-side representation of the memory object as an ensemble of physical fragments or fragment groups (i.e., shards) that are distributed across many different storage nodes and accessible through many different, usually non-contiguous physical memory addresses. It is the data chunk of data-containing application objects that comprises a large set of data elements from which a subset needs to be selected and retrieved for computational purposes. For instance, user code operates on or transforms the consumer data that is present in the data chunk of an input data object and in doing so may produce new data elements in the data chunk of an output data object. Data objects in embodiments of the invention are preferably immutable, which means that input data objects are read-only and cannot be modified and a separate output data object is created to store the modified data of the input data object, or any intermediate or final computation results based on the data of the input data object. More generally, application objects are treated as immutable objects, meaning that once created, the access to data elements of the data chunk is restricted to read-only. The metadata of such "immutable" application objects may be altered under specific circumstances and only if the data contents in the data chunk are not affected by the metadata manipulations. The data elements to be selected are thus comprised by the respective data chunk of each referenced application object. In contrast thereto, view objects typically have an empty or non-specified data chunk. As explained before, the different chunks that compose an application object (metadata, user data, data) may represent different memory objects in the computer memory that have different corresponding OIDs.

Referring to FIG. 1 again, the MOMU 104 of each compute node 110a-d can quickly compute the physical memory address corresponding to memory fragments accessed by the compute cores 101 of that same compute node and thus gather in a node-local prefetch memory 103 the memory object fragments that are scattered over many remote memory nodes 121 through 124. The prefetch or cache memory unit 103 may be part of a hierarchically organized computer memory that is local to the compute node 110a, e.g. form a memory subsystem.

Stored memory object fragments can also be shared among multiple tasks that are executed by the worker processes managed by the RTM units 107 of the different compute nodes 110a-d. Tasks executed on one compute node generate memory objects that normally cannot be accessed on the distributed shared computer memory through MOMUs of different compute nodes, because their respective OIDs are dependent on the compute node and will not be known by other compute nodes. However, compute nodes may still exchange OlD information in the context of task-based workload distribution methods, e.g. task stealing. To access memory object content on a different compute node than the compute node that first created this memory object, the object storage firewall of the different compute nodes may first verify that the correct access rights have been granted. For instance, read permissions may be granted for a pool of tasks that have been assigned to the same first security group, e.g. user group, irrespective of the compute cores that are executing the tasks. If no or insufficient/wrong access rights have been granted, the access will be denied. Typically, only the owner task of an OlD can write, while others have read access. Software locks may be used to handle write permissions set by the programmer.

An OlD generation unit of the MOMU 104 may be configured to issue new OIDs in response to an OlD request from a requester, e.g. the RTM unit 107 of the compute node 110a which requests new OIDs for child task memory objects or which requests a new OlD for an application object to which the results of a mathematical computation or transformation (number or vector addition, multiplication, scaling operations or more complex arithmetic functions such as logarithms, exponentials, or trigonometric functions, and others) are written after task execution by the compute cores 101. In alternative embodiments, the OlD generation unit of the MOMU can be implemented, e.g. embedded, in the RTM unit 107 of the compute node 110a.

A particular type of memory access request messages is concerned with application object manipulations that target the object's metadata, which may include security attributes (access permissions) related to the application object. Operations manipulating the metadata of application objects may be handled by an object manipulation unit of the MOMU. These operations may include the splitting or merging of two distinct memory objects, the change of access permissions, and others. In some embodiments of the invention, an object storage firewall may be provided as part of each compute node 110a-d, which is configured to manage privileges, verify and grant access rights related to memory objects, or parts thereof, when passing through the MOMU.

As described previously, the compute nodes composing the distributed computing system may each contain an object cache memory that is storing memory objects, or relevant parts thereof, at the compute node-level. Even though it is feasible to maintain more than one local copy of a memory object, or fragments thereof, in a corresponding number of compute nodes, not every compute node is allowed to modify or write into a memory object that is a shared resource. More specifically, only the node-bound task that caused the generation of the memory object as shared resource may have the right to alter the contents of the memory object, while tasks that are not native to the node are lacking these rights. However, every compute node is allowed to read information from a memory object that is a shared resource, e.g. after the data has been written and made immutable. Multiple copies of immutable memory object with read-only access may exist in the distributed computing system, e.g. for the purpose of data redundancy and data loss prevention. Tasks running on different nodes may still be able to read information content of shared memory objects that are stored in the local object cache memory. Typically, no consumer task is spawned while a producer task is running on the same object such that write inconsistencies in shared memory objects are avoided.

In embodiments of the invention, a view definition provides a compact representation of the selection rules. A view object is another type of memory object and acts as a wrapper object for the view definition/definition of the selection rules. It is assigned a unique OlD and comprises a metadata chunk and a user data chunk but, in contrast to an application object, does not include a data chunk or includes a data chunk that is empty. Moreover, it is a characteristic of the view object that its metadata chunk includes the view definition in accordance with a prescribed format. The view definition specifies a view type, a reference to at least one of an application object and a further view definition (target), and the fixed format used to encode the selection rules that apply to the target. Here, the target to be specified is either an application object proving input data or, in the case of recursively defined views, the view definition of another view object. The reference to an application object is preferably obtained in the form of an object identifier (OID).

As the selection rules are specific to each view type, and there may be several different standard view types defined in advance, so is the corresponding format that encodes the selection rules. For instance, the format for the view definition may be that of an n-tuple or list, or any other appropriate data structure for that purpose, whose length, number of mandatory and optional arguments, number of parameters, etc., depends on the specific view type. The typical format for the view definition is self-contained in the sense that it includes its own view type and length as standard parameters, e.g. a type code 'tc' and a view definition byte-length parameter 'vLen', which have predetermined positions in the data format used to encode or numerically represent the view definition, e.g. the first and second position in the data format.

In the following figures, different view definitions/view types and their corresponding view objects will be explained. To identify and distinguish between the various view types, a type code 'tc' can be assigned and used as a view parameter in accordance with embodiments of the invention. Hereinunder, memory objects with a particular OlD are also labelled according to their assigned OlD for brevity, e.g., memory object 'X' designates a memory object that is uniquely identifiable by its assigned object identifier 'X'.

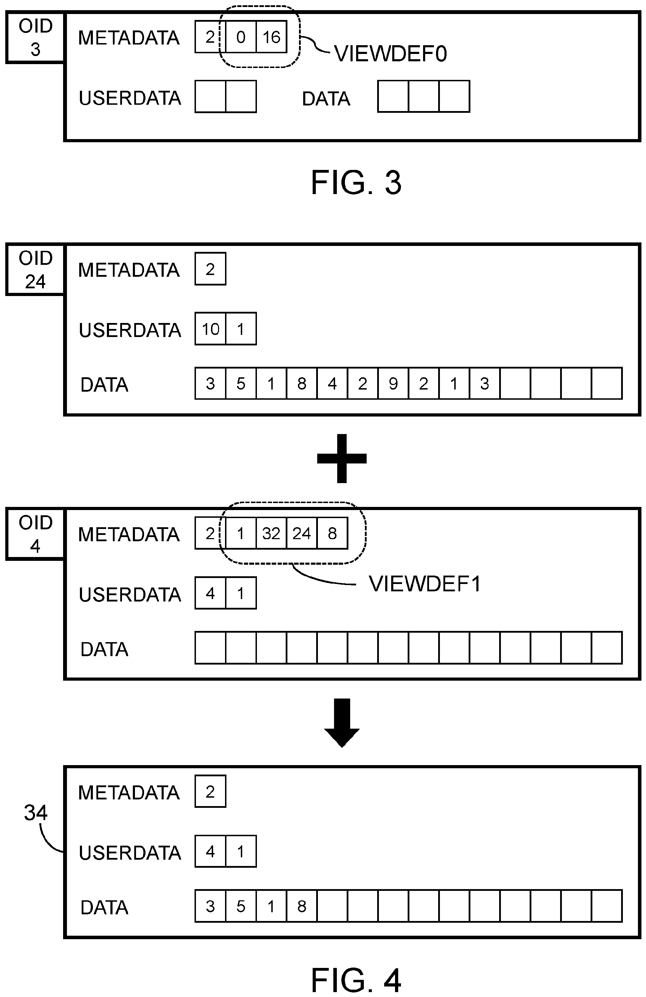

FIG. 3 shows a memory object '3' that includes a view of the 'empty type', which indicates that the memory object '3' is actually a data object that does not implement or use views. The data structure for the view definition 'VIEWDEF0' associated with this type of view object may be of the following format:
[tc, vLen].

The type code '0' may be assigned to data objects that do not specify views, e.g. have an 'empty' view. For instance, [tc, vLen] -> <0, 16>, if the data structure for the empty view definition occupies a total size of 16 bytes in the computer memory (e.g. 8 bytes for each of tc and vLen). The indication (i.e., empty view) to treat the application object as a data object takes up only a very small amount of space in physical computer memory. This view definition does not have any data access functionality. The chunks related to the user data and the (raw) data may contain data entries or may be void (e.g., if not yet filled with data).

FIG. 4 shows a memory view object '4' of the 'base type'. The view definition 'VIEWDEF1' associated with this type of view object expresses a linear and continuous subset or block of data from the raw data of a referenced application object. The data structure for the view definition 'VIEWDEF1' may be of the following format:
[tc, vLen, OID, dLen].

Here, the additional view parameters 'OID' and 'dLen' respectively designate the OlD of the referenced application object and the amount of data (e.g. in bytes) that is taken from it. The type code '1' may be assigned to view objects of the 'base type'. The materialization of the base view definition results in a sequence of contiguous data elements from the underlying data object, which sequence may include all the data element or only a subset thereof. Base-type view objects usually imply a zero offset for the data to be selected from the application object, i.e. the data selection and extraction generally starts with the first data element of the underlying data object. In embodiments of the invention, memory view objects of the 'base type' may be used as primitives for the construction/definition of more complex memory view objects.

In the present example, the ten 2-byte sized data elements that are contained in the data chunk of application (data) object '24' represent a 10x1 user data vector. The data element size is implicitly defined by the data element type that is encoded in the first item of each object's 'METADATA' chunk, whereas the structure (e.g. vector dimensions) of the input data is provided in the 'USERDATA' chunk of the underlying data object '24'. The exemplary base view definition 'VIEWDEF1' of the base view object '4' is instantiated with the following parameters:
[tc, vLen, OID, dLen] -> <1, 32, 24, 8>.

The first parameter, tc = 1, reflects the type code for base views; the second parameter, vLen = 32, expresses the size in bytes that the base view definition 'VIEWDEF1' occupies in the computer memory (e.g., four times the byte-size of a single view parameter in the computer memory: vLen = 4*8 bytes = 32 bytes); the third parameter, OlD = 24, provides the OID-reference to the application object; and the fourth parameter, dLen = 8, expresses the fact that the first four data elements of the underlying data object are selected as the desired subset (e.g., the amount of data to be taken equals '8 bytes', which is four times the byte-size of a single data element: 4*2 bytes = 8 bytes). The selection of data items resulting from the execution of the base view definition 'VIEWDEF1' is represented as the data block of the materialized view 34 and has the structure of a 4x1 data vector (cf. entries into the 'USERDATA' block).

As explained before, ephemerally materialized views are generally very short-lived and directly consumed by the requesting compute core. It is thus unnecessary to assign a unique OlD to the materialized view, i.e. the number '34' of the present example does not necessarily correspond to an object identifier. However, it may occasionally be of advantage to temporarily store the data outputs produced by the view execution hardware in a corresponding data object, which then supersedes the original view object. Only in this case is the materialization persistent and does the materialization of the view result in the conversion of the view object into a data object that is stored in computer memory. Hence, a persistently materialized view object is again a data object. The process of persistent materialization may be initiated by the runtime management unit if a frequent access to one or multiple data elements of the same selection of data elements expressed by a view is detected or if a large portion of the selected data elements expressed by the view is detected. The view is executed once for all the data elements of the selection of data elements represented by the view and the so-obtained data elements are stored for re-use in the data chunk of the corresponding data object. This avoids that the view has to be executed each time in the future that the requesting compute node core or cluster of cores again needs to read data elements from the selection of data elements, whereby memory access time and energy expenditure can be decreased. During the conversion process, the view object is transformed into a data object, but the unique object identifier is maintained. This can be achieved by substituting an empty view definition for the original view definition contained in the metadata chunk of the view object, thus indicating that henceforth the application object is to be interpreted and treated as a data object. At the same time, the previously empty data chunk of the view object now belongs to the corresponding data object (having the same OlD) and is filled with the selected data elements expressed via the original view definition.

For instance, the empty-type view definition < 0,8 > may be substituted for the base-type view definition 'VIEWDEF1' within the 'METADATA' chunk of view object '4' of the present example and the 'DATA' chunk filled with the selected data elements {3; 5; 1; 8} to persistently materialize the view object '4' into the corresponding data object '4'. In the absence of a persistent materialization of the view object '4' and assuming [OID, chunk, offset]ₕₑₓ as an extended logical addressing scheme using hexadecimal notation, an exemplary attempt to read the second element of the data selection represented by 'VIEWDEF1' of view object '4' (offset = 4 bytes, starting with zero offset for the 0-th element), would first cause the fetching of the base view definition 'VIEWDEF1' from the metadata chunk of view object '4'. In the present example, the metadata of view object '4' may start at the extended logical address 0x000040000000 (OlD = 0x00004, chunk index = 0x00 and offset 0x00000). The base view 'VIEWDEF1' on the referenced data object '24' would then be executed with the offset 0×000040200004 (4-byte offset in data chunk with chunk index 0x02, corresponding to the second data element), which yields the extended logical address 0x000180200004 (OlD = 0x00018, chunk index = 0x02 for the 'DATA' chunk and offset 0x00004). Here, the offset into the empty data chunk of an immaterialized view object is not forbidden since it is used to identify the data element of the data elements selected by the view that needs to be accessed in computer memory. Next, the physical address associated with the extended logical address 0x000180200004 would be calculated deterministically to read the data value '1' of the second data element of the underlying data object '24' (start index for data elements is zero) from the shared global computer memory.

In contrast thereto, performing the same access to the second data element of view object '4' after it has been persistently materialized would first cause the fetching of the empty view definition <0, 20 > from the metadata chunk of materialized view object '4' (in fact a data object). In the present example, the metadata of the materialized view object '4' would still start at the extended logical address 0×000040000000. The empty view on the materialized view object '4' as the corresponding data object would then be executed with the offset 0x000040200004, which yields the extended logical address 0×000040200004 (empty view applies an identity identify function to the logical addresses). Next, the physical address associated with the extended logical address 0×000040200004 would be calculated deterministically to read the data value '1' of the second data element of the materialized view object '4' (i.e. a data object) from the computer memory.

Although described with respect to the base view objects, the persistent materialization and view object conversion can be similarly applied to other types of view objects, in particular the different types of view objects that are explained hereinbelow. Furthermore, changes to the metadata of application objects treated as immutable objects may be allowed in embodiments of the invention if the data contents are not affected by the change. Dedicated commands for accessing and modifying the metadata of application objects, not available to the end user, may be implemented for increased security. Nonetheless, users may be given the possibility to manually trigger the persistent materialization of a view object. Another example of allowable metadata modification of application objects is the flattening of nested view definitions. Metadata information and user data information of application objects can be inspected by the runtime management units of the different compute nodes for the purposes of data interpretation, view execution and persistent view materialization, view flattening and simplification, the creation of new views and tasks, etc., but is usually not used by the compute cores.

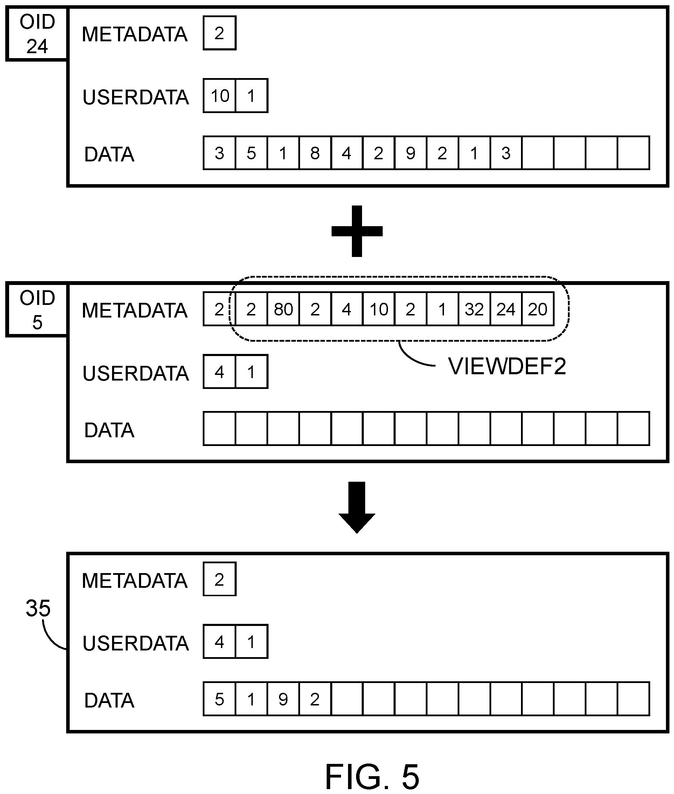

FIG. 5 shows a memory view object '5' of the 'stride type'. The view definition 'VIEWDEF2' associated with this type of view object expresses a subset or block of data formed by periodically extracting a group of consecutive data elements of specified size from the raw data of a referenced view definition. The reference to the further view definition can be understood as a reference to a virtual output object or virtual target, viz. the object that would be obtained when the view object containing the further view definition materialized. Here, "virtual" refers to the fact that at compile time, and in general even at runtime, the intermediate output data object holding the data items to be selected via the referenced view definition is usually inexistent in the computer memory. The data structure for the view definition 'VIEWDEF2' may be of the following format:
[tc, vLen, offset, groupLen, stride, repeat, <view>].

Compared to the memory view object of the 'base type', the 'stride view' object uses the groupLen, offset, stride and repeat parameter as additional view parameters to appropriately represent the selection of data elements from the virtual target by periodic extraction. More specifically, the 'offset' parameter expresses the number of bytes to advance within the data chunk of the virtual target before reaching the first data element in the first data element group to be selected and extracted, still assuming that the data elements of the virtual target are stored sequentially and linearly in the logical memory space associated with the virtual target. The 'stride' parameter specifies the frequency at which the consecutive groups of data elements are selected and extracted from the virtual target, e.g. in terms of the number of bytes that separate the first data elements of two consecutive groups. The 'repeat' parameter indicates the total number of data element groups to be selected and extracted, i.e. the number of repetitions. Eventually, the 'groupLen' parameter specifies the size (e.g. in bytes) of each group of data elements during the selection process.

It is noted that each group of data elements (data element group) may consist of a single data element or may comprise a series of consecutive data elements. For instance, a stride parameter 'stride' equal to 'k' and a single data element per group means that every kth data element is retained in the selection, whereas the intermediate k-1 data elements are rejected. In contrast thereto, a stride parameter 'stride' equal to 'k' and two data element per group means that every kth block of two consecutive data elements is retained in the selection, whereas the intermediate k-1 blocks are rejected. The underlying data object '24' of the present example, data element size and user data structure are the same as in FIG. 4. The exemplary stride view definition 'VIEWDEF2' of the stride view object '5' has been instantiated with the following arguments:
[tc, vLen, offset, groupLen, stride, repeat, <view>] ->
< 2, 80, 2, 4, 10, 2, < 1, 32, 24, 20 > >.

In the present example of the disclosure, the view definition 'VIEWDEF2' is declared recursively; the target is given by reference to the further view definition < 1, 32, 24, 20 >. This further view definition represents or implies a virtual data output object (i.e., the virtual target) that results from a base view definition (type code '1') operating on the underlying data object '24'. As explained before, applying the base view definition < 1, 32, 24, 20 > to the referenced input data object '24' would yield an intermediate, virtual output data object (not shown) that contains all the data elements of data object '24' (e.g. ten 2-byte long data elements being worth 20 bytes of data) - essentially an immaterialized copy of the data chunk of the data object '24'. Immaterialized, because no actual copying operation needs to be performed for the intermediate, virtual data object.

The stride view definition can be rewritten, e.g. by the compiler, in flattened form as < 2, 80, 2, 4, 10, 2, 1, 32, 24, 20 >. This flattened form is syntactically devoid of any nested lists (lists of lists), although a recursive definition is still implicit. The flattened view definition is implemented as a simple list of view parameters, which is better suited for linear storage in the metadata chunk of the stride view object '5'. In embodiments of the invention, nested views are preferably stored in the flattened form. Focusing now on the remaining, first six parameters of the stride view definition 'VIEWDEF2', the following selection rules for the (virtually copied) data elements of the input data object '24' can be derived:
- a 'stride view' operation is intended (type code parameter set to '2');
- the data structure for the flattened, stride view definition 'VIEWDEF2' has a length of 80 bytes when stored in the computer memory (ten times the byte-size of a single view parameter in the computer memory: vLen = 10*8 bytes = 80 bytes);
- the number of bytes to skip in the referenced input data object '24' before starting the striding process is two bytes (offset parameter is set to '2') or one data element worth of data (since two-byte large data elements are provided) - the first data element to be selected is thus '5';
- the number of bytes contained within a single group of data elements is four bytes (groupLen parameter set to '4'), which is equivalent to the selection of blocks formed by two consecutive data elements in the referenced data object '24';
- the number of bytes between the beginning of the different groups of data elements is ten bytes (stride parameter set to '10');
- the total number of groups to be selected is two (repeat parameter set to '2').

Applying the selection rules encoded by the stride view definition 'VIEWDEF2' to the virtual copy of the input data object '24' results in the materialization of the view definition 'VIEWDEF2' in the data (output) block of materialized view 35. Again, it is usually unnecessary to assign a unique OlD to the short-lived (ephemerally) materialized view, i.e. the number'35' of the present example usually does not correspond to an object identifier. The selected data items {5, 1, 9, 2} have the structure of a 4x1 data vector. However, it may occasionally be of advantage to temporarily store the data outputs produced by the view execution hardware in a corresponding data object with identical OID. Only in this case does the persistently materialized view lead to a data output object that is stored in computer memory.

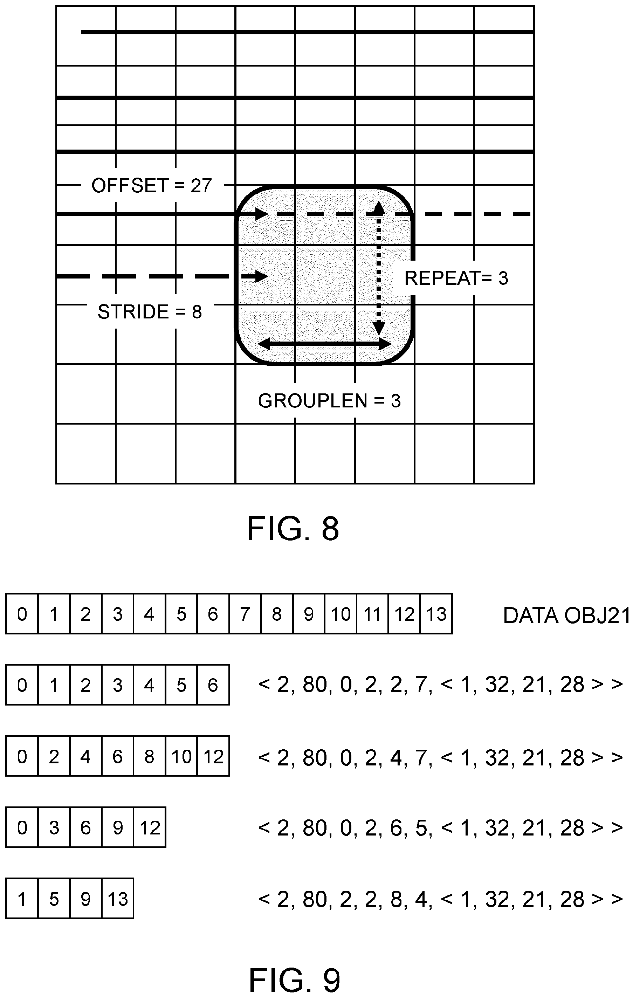

The 'stride type' allows to obtain views for stride access patterns over arrays. Submatrix selection within a larger data matrix is one possible application. FIG. 8 illustrates an example in which submatrix elements belonging to a smaller 3x3 matrix are selected from a larger 8x8 data matrix, using the stride operation on the data of the larger matrix. Another application of stride operations and related stride view objects is the selection of ranges, e.g. the selection of ranges of values for loop indices. FIG. 9 illustrates the selection of ranges based on the data 'DATA OBJ21' of a referenced data object '21', using multiple different view definitions. The selected ranges as obtained after execution of the corresponding stride view definitions are shown next to the stride view definitions.

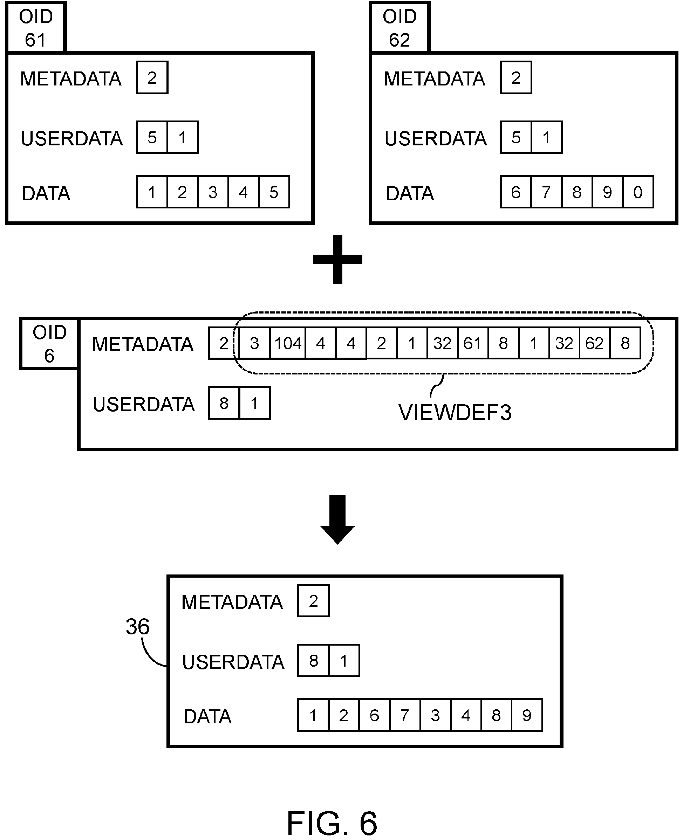

FIG. 6 shows a memory view object '6' of the 'weave type'. The view definition 'VIEWDEF3' associated with this type of view object expresses a subset or block of data formed by alternately extracting a group of consecutive data elements from the raw data of two referenced view definitions/virtual targets. The data structure for the view definition 'VIEWDEF3' may be of the following format:
[tc, vLen, groupLen1, groupLen2, repeat, <view1>, <view2>].

The meaning of the parameters 'tc' and 'vLen' are the same as previously described. Compared to the 'stride view' definition, the view definition 'VIEWDEF3' of the 'weave type' extracts data element groups alternatingly from two different virtual targets and therefore requires the additional view parameters 'groupLen1' and 'groupLen2', respectively relating to the data element group size to be extracted from the first and second target, and two view definitions <view1> and <view2>. Each virtual target, represented by the two view definitions <view1> and <view2>, relates to an underlying application object, e.g. directly when expressed through a 'base view' definition, or indirectly when a more complex and/or nested view definition (i.e. derived from 'base view' definition) is intervening. The 'weave type' view definition respects the order in which the two virtual targets are specified. As for the stride view definition, the weave view definition may be flattened, e.g. by a compiler. In variations, the set of view parameters characterizing the 'weave' view definition may include a first and a second offset parameter for the first and second referenced virtual target, respectively. This variation could replace and simplify a weave view accepting two stride views as references or a composition of a stride view and a weave view.

In the present example of the disclosure, the data element size and user data structure for the two underlying data objects '61' and '62' are defined similarly to the previous examples. The exemplary weave view definition 'VIEWDEF3' of the weave view object '6' has been declared with the following arguments:
[tc, vLen, groupLen1, groupLen2, repeat, <view1>, <view2>] ->
< 3, 104, 4, 4, 2, < 1, 32, 61, 8 >, <1, 32, 62, 8 > >.

The first argument, e.g. the parameter tc = 3, reflects the type code for weave-type views; the second argument, e.g. the parameter vLen = 104, expresses the size in bytes that the weave view definition 'VIEWDEF3' occupies in the computer memory (e.g., thirteen times the byte-size of a single view parameter in the computer memory: vLen = 13*8 bytes = 104 bytes); the third and fourth argument, e.g. the parameters groupLen1 = 4 and groupLen2 = 4, express the fact that groups consisting of two data elements each are repeatedly extracted from each one of the two virtual targets (e.g., the amount of data to be taken equals '4 bytes', which is two times the byte-size of a single data element); the fifth argument, e.g. the parameter repeat = 2, indicates that the data element groups are extracted twice with respect to each virtual target; the sixth and the seventh argument are the formatted parameter lists that represent the two view definitions <view1> and <view2>. Being declared recursively, the view definition 'VIEWDEF2' is providing the further view definitions < 1, 32, 61, 8 > and < 1, 32, 62, 8 > as indirect references to the underlying data objects '61' and '62', respectively. That is, the two data objects '61' and '62' are represented indirectly - as virtual targets - through the base view definition (type code '1 ') that is operating on the respective data object. The selection of data items resulting from the execution of the weave view definition 'VIEWDEF3' is represented as the data block of the view materialization 36 and has the structure of an 8x1 data vector. As can be seen in the figure, groups of two consecutive data elements each are extracted in an alternating fashion from the underlying data objects '61' and '62'. Again, it is usually unnecessary to assign a unique OlD to the short-lived (ephemerally) materialized view, i.e. the number '36' of the present example usually does not correspond to an object identifier. However, it may occasionally be of advantage to temporarily store the data outputs produced by the view execution hardware in a corresponding data object with identical OID. Only in this case does the materialized view have a corresponding materialized view object (i.e., the data output object) in computer memory.

In embodiments of the invention, the size of the extracted data element groups 'groupLen1' and 'groupLen2' may be the same or different. As explained before, the view definition 'VIEWDEF3' can be transformed, e.g. by the compiler, into a flattened form, e.g. a simple list of view parameters: < 3, 104, 4, 4, 2, 1, 32, 61, 8, 1, 32, 62, 8 >. The weave-type is a view definition that can be derived from the 'base view' type and is advantageously used, for instance, to concatenate the raw data that is located within different data structures.

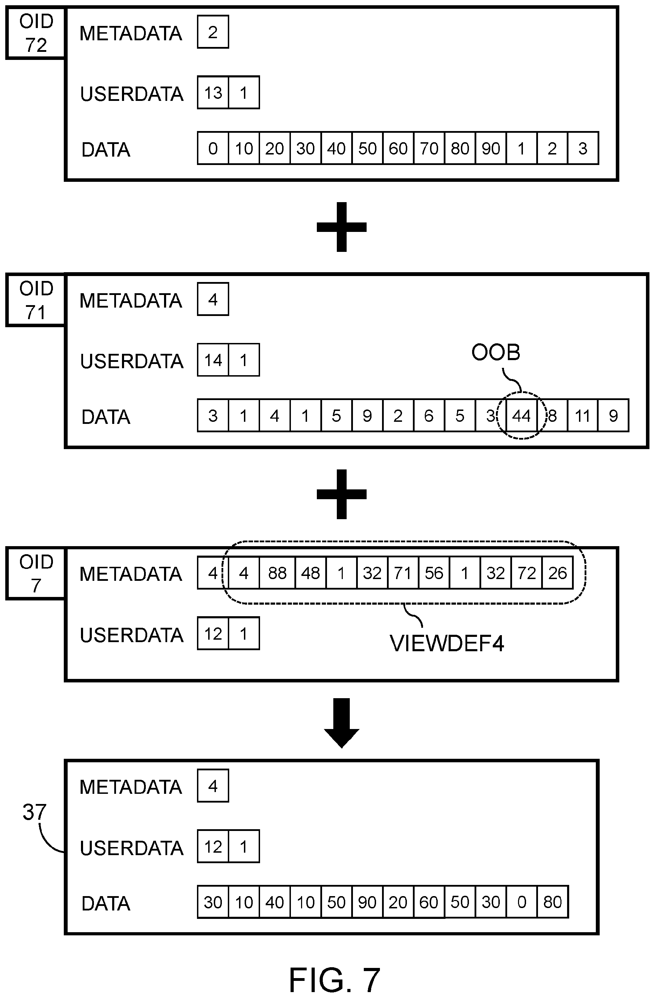

FIG. 7 shows a memory view object '7' of the 'indirect type'. The view definition 'VIEWDEF4' associated with this type of view object expresses a subset or block of data obtained by extracting one or multiple data elements of a second virtual target, using the data elements of a first virtual target as indices. In other words, the selection of data elements is index-based. The data structure for the view definition 'VIEWDEF4' may be of the following format:
[tc, vLen, dLen, <idxView>, <view>].

The meaning of the parameters 'tc' and 'vLen' are the same as previously described. As for the 'base view' type, the 'indirect view' type uses a length parameter 'dLen' to express the number of data elements (in this case representing indices) to be selected from the first virtual target, i.e. the index-providing virtual output object represented by the first view definition <idxView>. The data elements of the second virtual target that are addressed by the selection of indices taken from the first virtual target then constitute the selection of data elements by the 'indirect view' operation, which also appears in the 'DATA' chunk of an output data object. The two view definitions <idxView> and <view> directly or indirectly reference the underlying input data objects of which data selections are described by (nested) lists of view parameters. The 'indirect type' view definition respects the order in which the two references are specified.

In the present example of the disclosure, the data element size and user data structure for the two underlying data objects '71' and '72' are defined similarly to the previous examples. Data elements of data object '71' each have a size of 4 bytes, and data elements of data object '72' each have a size of 2 bytes. The exemplary indirect view definition 'VIEWDEF4' of the indirect view object '7' has been declared with the following arguments:
[tc, vLen, dLen, <idxView>, <view>] -> < 4, 88, 48, <1, 32, 71, 56>, <1, 32, 72, 26 > >.

The first argument, e.g. the parameter tc = 4, reflects the type code for indirect-type views; the second argument, e.g. the parameter vLen = 88, expresses the size in bytes that the indirect view definition 'VIEWDEF4' occupies in the computer memory (e.g., eleven times the byte-size of a single view parameter in the computer memory: vLen = 11*8 bytes = 88 bytes); the third argument, e.g. the parameters dLen= 48, indicates that the first twelve data elements (i.e., indices) of the first virtual target represented by <idxView> are taken as indexing set with respect to the 'DATA' chunk of the second virtual target represented by <view> (e.g., the amount of data to be taken equals '48 bytes', which is twelve times the byte-size of a single data element: 12*4 bytes = 48 bytes); the fifth and the sixth argument are the formatted parameter lists that represent the two view definitions <idxView> and <view>. Being declared recursively, the view definition 'VIEWDEF4' is providing the further view definitions < 1, 32, 71, 56 > and < 1, 32, 72, 26 > as indirect references to the underlying data objects '71' and '72' respectively. That is, the two data objects '71' and '72' are represented indirectly- as virtual targets- through the base view definition (type code '1') that is operating on the respective data object. The selection of data items resulting from the execution of the weave view definition 'VIEWDEF4' is represented as the 'DATA' block of the ephemerally materialized view 37 and has the structure of an 12x1 data vector. Again, it is usually unnecessary to assign a unique OlD to the short-lived ephemerally materialized view, i.e. the number '37' of the present example usually does not correspond to an object identifier. However, it may occasionally be of advantage to temporarily store the data outputs produced by the view execution hardware in a corresponding data object with identical OID. Only in this case does the persistently materialized view lead to a data output object that is stored in computer memory.

As for other nested view definitions, the indirect view definition may be flattened, e.g. by a compiler. The flattening process results in a list of view parameters, viz. < 4, 88, 48, 1, 32, 71, 56, 1, 32, 72, 8 >. In embodiments of the invention, multiple data elements may be selected several times by an index that is repeated in the first view definition <idxView>, and a predefined numeral such as '0' or 'NaN' may be returned in the data selection of the output object if a given index does not lead to a valid entry in the second reference (e.g. out of bounds). For instance, the indices '1' and '3' and the corresponding data elements '10' and '30' occur twice in the final selection included in the materialized view '37', whereas the index '44' does not address a valid data element of the second data object '72', e.g. is out of bounds (OOB), and causes a substitution which replaces the missing/unavailable data element with '0' (or any other suitable predefined value). Although a zero index has been used to select the first data element from the 'DATA' chunk of a referenced input object, a different value for this base/start index may be chosen. The 'indirect'-type view definition is particularly well-suited for applications that require flexible, easily accessible but efficient storage of raw data to be processed, e.g. graphs or networks that are most often represented through indices. Moreover, the 'indirect'-type view definition can be used to express sparse data structures.

Various types of memory view definitions and corresponding view objects have been described in the preceding paragraphs, which can be used as standard or built-in types for the construction or derivation of more advanced types of memory view definitions and view objects. The list of standard view types is not exhaustive, and the skilled person will appreciate that a different number or additional types of memory view definitions/objects may be implemented. Furthermore, it is possible in variants of the above-described view definitions to express view parameters in terms of a number of data elements instead of a number of bytes, e.g., specify a number of data elements to be skipped or a number of data elements composing a single group of data element. More advanced types or derived types of memory view definitions and related view objects can be obtained by composition of standard-type memory view definitions, resulting in nested memory view definitions and nested memory view objects. Such view compositions may select data elements from a single data input object or a plurality of data input objects, e.g. two or more data input objects. For instance, the nesting or combination of two or more weave view operations in more complex view definitions may be one way of combining selections of data elements from up to four different data input objects. It is an advantage of embodiments of the invention that the data structure used to represent complex memory view definitions operating on large-sized input data objects only occupy a very limited amount of memory in the computer memory, usually much smaller compared to the amount of memory required to store the raw data of the underlying input data objects.

Furthermore, neither the raw data that is provided by a data input object nor the finally obtained selection of data elements in a view materialization (e.g., generated on the fly or retained temporarily in a data output object) is limited to represent vectors as the underlying data structure that is encoded in the application object. Although the raw data is generally stored in a linearized fashion in the data chunk of the application object's associated logical memory space, the raw data may express the contents of different data structures when exposed to the user. The way the raw data is organized, when exposing it to the user, and the structured access of the raw data in application objects by the user is governed by the information that is present in the application object's user data chunk. Depending on this user data information, or changes thereto, the same linearized raw data pertaining to an application object may be interpreted differently, e.g., as matrix data, tensor data, time series, graph node data, etc. The skilled person will appreciate that raw data of application objects can be organized in many ways and/or along various dimensions. Embodiments of the invention are not limited to application objects whose raw data solely represents one-dimensional arrays or vectors, but application objects may also express the raw data associated with one or more of two-dimensional arrays or matrices, arrays or tensors of dimension three or higher, sparse matrices, graphs, and time series.

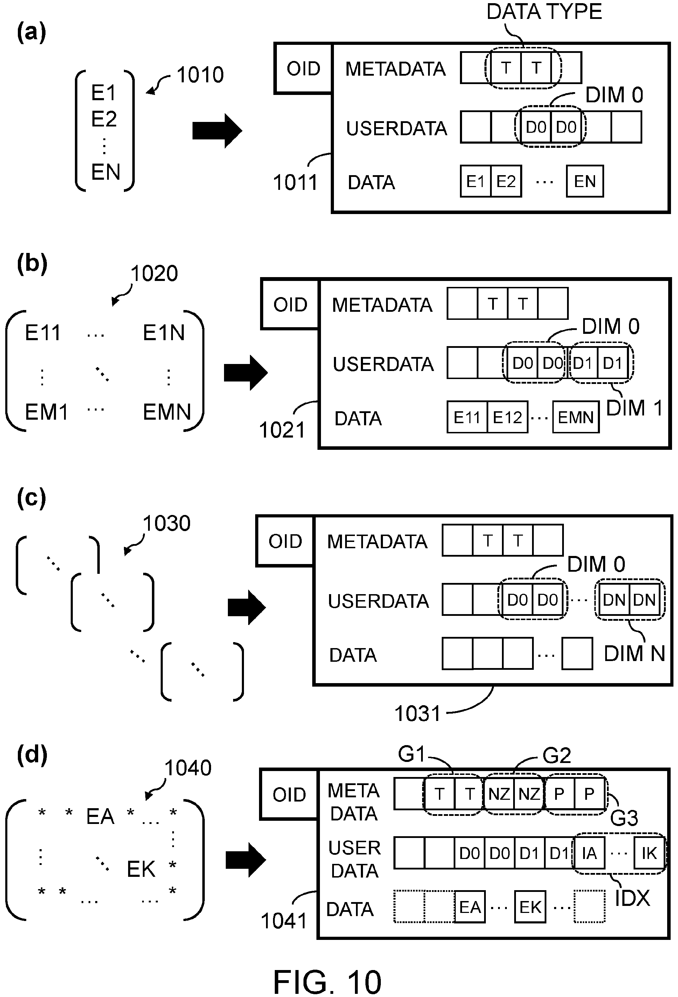

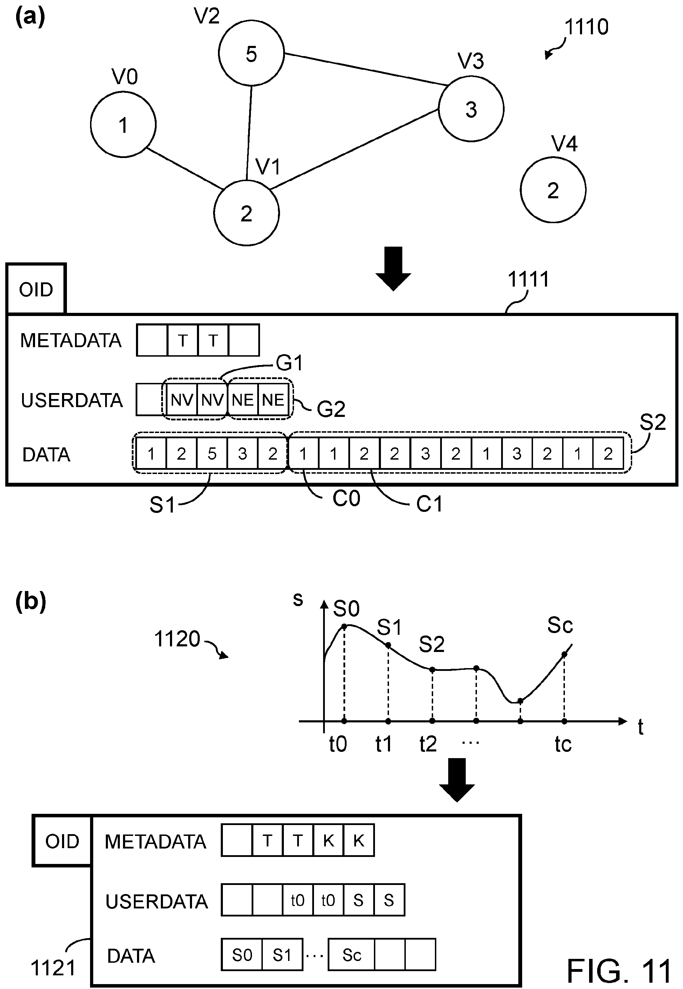

FIG. 10 and FIG. 11 show different data structures and the corresponding application objects in which the respective data structure is encoded. As explained before, the raw data related to each data structure comprises the different data elements (values) of the data structure but usually does not contain information regarding the organization of the different data elements within the data structure, e.g. information related to a number of rows, columns, graph vertices, etc. The raw data may be stored linearly in the data chunk of the application object. In contrast thereto, the user data related to each data structure comprises information regarding the organization of the data elements within each data structure. The user data may be stored linearly in the user data chunk of the application object, e.g. as a sequence or string of numerals. The contents of an application object, e.g. elements of the metadata chunk, user data chunk and the (raw) data chunk, are stored in digital form, preferably in binary form, in the distributed computer main memory. That is the memory fragments associated with the physical storage of the application object in the distributed computer memory, e.g. a distributed and shared global computer memory, contain each digital data representative of a data element belonging to one of the application object's different chunks.

In FIG. 10a, a one-dimensional vector 1010 as perceived by the user is encoded in and represented by the vector-type data object 1011. Vector components E1 to EN are stored as data elements in the 'DATA' chunk of the vector-type data object 1011, whereas the data type 'T' of the vector components (e.g. integer, double, etc.) is stored in two consecutive elements of the 'METADATA' chunk. Moreover, the number of vector components 'DO' along the only dimension 'DIM 0', i.e. the vector size, is stored in two consecutive elements of the 'USERDATA' chunk.

In FIG. 10b, a two-dimensional matrix 1020 as perceived by the user is encoded in and represented by the matrix-type data object 1021. Matrix coefficients E11 to EMN are stored as data elements in the 'DATA' chunk of the matrix-type data object 1021, whereas the data type 'T' of the MxN matrix coefficients (e.g. integer, double, etc.) is stored in two consecutive elements of the 'METADATA' chunk. Moreover, the number of matrix coefficients 'DO' along a first dimension 'DIM 0', i.e. the number of columns or row size, and the number of matrix coefficients 'D1' along a second dimension 'DIM 1', i.e. the number of rows or column size, are stored in consecutive elements of the 'USERDATA' chunk.

In FIG. 10c, a three- or higher-dimensional tensor 1030 as perceived by the user is encoded in and represented by the tensor-type data object 1031. Tensor coefficients are stored as data elements in the 'DATA' chunk of the matrix-type data object 1031, whereas the data type 'T' of the D0 x ... x DN tensor coefficients (e.g. integer, double, etc.) is stored in two consecutive elements of the 'METADATA' chunk. Moreover, the number of tensor coefficients 'DO' along a first dimension 'DIM 0', the number of matrix coefficients 'D1' along a second dimension 'DIM 1', and so forth, are stored in consecutive elements of the 'USERDATA' chunk.

In FIG. 10d, a two-dimensional sparse matrix 1040 from the user's point of view is encoded in and represented by the sparse matrix-type data object 1041. All the matrix coefficients (zero and non-zero) are formally associated with corresponding data elements in the 'DATA' chunk of the sparse matrix-type data object 1041, knowing that the data object's logical memory space is extremely large (sizeless data objects) - and anyway large enough to allow the mapping of each matrix coefficient to a different one of the data object's fragments - and further knowing that physical computer memory is only allocated with respect to data object fragments that hold non-zero coefficients. In the present example, only the data elements to which the non-zero sparse matrix coefficients EA to EK have been assigned (drawn with solid boundary) are actually allocated in physical computer memory, e.g. in the distributed computer memory. This means that the storage format is intrinsically sparse and hence well-adapted for sparse matrices. As in the preceding examples, the data type 'T' of the MxN matrix coefficients (e.g. integer, double, etc.) is stored in a first group G1 of elements of the 'METADATA' chunk. Additionally, a second group G2 of elements of the 'METADATA' chunk has been attributed to the storage of the overall number of non-zero matrix coefficients, 'NZ', and a third group G3 of elements of the 'METADATA' chunk holds pointers to values, 'P'. As for the matrix-type data object 1021, the number of matrix coefficients 'DO' along a first dimension 'DIM 0', i.e. the number of columns or row size, and the number of matrix coefficients 'D1' along a second dimension 'DIM 1', i.e. the number of rows or column size, are stored in the 'USERDATA' chunk as two groups of two consecutive elements each. In contrast to the matrix-type data object 1021, the sparse matrix-type data object 1041 also includes index information 'IDX' (e.g., linear index, or row/column index pair) in the 'USERDATA' chunk, which allows to identify the position of each non-zero matrix coefficient within the sparse matrix 1040. Alternatively, conventional dense storage formats for sparse matrices may be implemented in the 'DATA' chunk of the sparse matrix-type data object, including the "dictionary of keys" storage format, the "list of lists" storage format, the "coordinate list" storage format, the "compressed sparse row" storage format, and the "compressed sparse column" storage format.

FIG. 11a shows a simple, undirected graph 1110 from the user's point of view and its encoded counterpart - the graph-type data object 1111. A graph is simple if there is at most one edge between any pair of graph vertices. As shown for the case of vertex 'V4', the graph may be disconnected, i.e., individual vertices or vertex groups are not linked by edges to other vertices or vertex groups of the graph. A value is assigned to each vertex V0 through V4. As in the previous examples, the data type 'T' of the vertex values (e.g. integer, double, etc.) is stored in one or multiple consecutive elements of the 'METADATA' chunk of the graph-type data object 1111. The 'USERDATA' chunk of the graph-type data object 1111 may comprise a first and a second group of data elements, G1 and G2, respectively holding the total number of vertices 'NV' and the total number of edges 'NE' present in graph 1110. Next to a first series 'S1' of data elements that keep the values of the respective graph vertices V1 to V4, the 'DATA' chunk of the graph-type data object 1111 comprises a second series 'S2' of data elements that store the presence of edges between graph vertices. The second series 'S2' stores an adjacency list for the graph vertices that have edges. This adjacency list is implemented as an ordered collection of lists, in which each list associates a different one of the graph vertices with all its neighboring vertices (i.e., the edge-connected vertices). The different lists appear in the order of increasing indices associated with the different graph vertices V0 to V4. By convention, disconnected graph vertices without any edges may be assigned the largest indices (if the vertex indices are assigned in an increasing order) and not appear explicitly in the second series 'S2'. The presence and the values of such nodes can be inferred from the total number of vertices 'NV' and the first series 'S1'. In each list appearing in the second series 'S2', a count of the neighboring or adjacent vertices precedes the sequence of indices that have been assigned to the adjacent vertices, thereby providing the list length information in a self-contained manner. For instance, the neighbor count 'C0' with respect to the first vertex V0 is 'one' and is followed by the index 'one' of vertex V1, which is the only graph vertex adjacent to vertex V0. Likewise, the neighbor count 'C1' with respect to the second vertex V1 is 'two' and is followed by the two indices 'two' and 'three' that have been respectively assigned to the vertices V2 and V3, i.e., the two graph vertex adjacent to vertex V1.

In a variation of the present example, the graph edges may be weighted and instead of storing only the index of the adjacent vertices for each graph vertex, edge weight - vertex index tuples (w, idx) may be stored in the 'DATA' chunk with respect to each graph node. This means that the weight for the edge that links a graph vertex to one of its adjacent vertices can be encoded without significant modifications. Furthermore, in embodiments of the invention, the graph data structure may be implemented differently, e.g. using adjacency or incidence matrix representations of the graph. Such matrix-based representations of the graphs often result in sparse matrices, which can be stored efficiently in the same way as the previously described sparse matrix-type data objects.

In FIG. 11b, a time series 1120 as perceived by the user is encoded in and represented by the time series-type data object 1121. Data points S0, S1, S2, ..., Sc of the time series 1120 are collected, e.g. sampled, regularly at time points t0, t1, t2, ..., tc. Like the data objects of the preceding examples, the time series-type data object 1121 stores the data type 'T' of the collected data points (e.g. integer, double, etc.) in consecutive elements of its 'METADATA' chunk. Additionally, one or more elements of the 'METADATA' chunk, or alternatively the 'USERDATA' chunk, may be assigned to the storage of a conversion factor 'K', which allows to convert a data element position/offset in the 'DATA' chunk into a corresponding time point of the time series. Furthermore, each data point of the time series 1120 is assigned to a corresponding one of the data elements of the 'DATA' chunk within the time series-type data object 1121, which data element stores the value of the data point. Therefore, a sequence of data points, collected linearly and continuously between a given starting time t0 and a current time tc, is mapped to an equipotent sequence of data elements of the 'DATA' chunk when written to the computer memory, e.g. the distributed and shared global computer memory. The 'USERDATA' chunk comprises information about the starting time 't0' and the overall size 'S' of the recorded data stream. In a variant of the present example of the disclosure, the 'METADATA' chunk may also include subsampling information, e.g. a subsampling step to be used when retrieving a relevant but smaller number of data point representative of the time series 1120 from the time series-type data object 1121. A time series-type data object in accordance with embodiments of the invention may also be used to represent data streams more generally.

In embodiments of the invention, nested memory view definitions may be simplified and/or flattened at the compile stage. In a flattened memory view definition, data input objects from which data elements need to be selected according to the view definition are referenced directly through their object identifiers rather than indirectly through another view definition or sequence of view definitions. This means that recursively defined memory view operations are unraveled into a single recursion-free memory view definition during the flattening process. The flattened form is the preferred form for storage of the nested view definition in the metadata chunk of the corresponding view object. The flattening process may be performed during the program compile stage and is generally hidden from the user.

In contrast thereto, a simplification or reduction of a nested memory view definition may comprise the replacement of certain compositions of two or more memory view definitions by a single memory view definition which, when executed, results in the same selection of data elements from the underlying input data object(s). More generally, the simplification or reduction process aims at reducing the number of referenced data structures/view definitions (e.g., one or multiple series, sequences and/or trees of referenced data structures) within the data structure associated with a nested view definition; the single view definition of a standard type being the simplest form that can result from the simplification process. The simplification of nested memory view definitions (i.e., compositions of memory view definitions) has the advantage that a number of calculation steps required to determine the address of a selected data element within the logical address space associated with the data object containing the data element can be reduced, resulting in a more efficient and lower latency address calculation. A compiler may be configured to parse through view definitions and search for predetermined patterns, for instance patterns of the type stride(stride (*)), base (base (*)), base (stride (*)), etc. Upon detection of one or more of these patterns, the compiler may replace the detected instance of the pattern by a corresponding simplified expression, e.g. a simpler view parameter list that contains less view parameters than the original view parameter list. The simplification process may be performed during offline compilation and optimization of the user source code or may be performed as part of an online compilation step, e.g. just-in-time compilation and code optimization. Additionally, a software library may perform a check on nested view combinations allowed by the compiler and simplify, transform, signal or eliminate some unallowable expressions upfront. For instance, base(stride(*)) view expressions, if not allowed by the compiler, may be detected and simplified into an equivalent stride(*) view.

By way of example, a first base-type view definition which references a second base-type view definition may be replaced by a single base-type view definition whose 'dLen' parameter is selected to be the smaller one of the 'dLen' parameters of the first and second base-type view definition. Similarly, a stride view definition operating on another stride view definition may be simplified and recast into a single stride view definition with updated parameter list. More specifically, taking the example of a repeated, nested submatrix selection from a larger user matrix 'MAT', a first stride view definition, VDefSt1, may be characterized by offset parameter o1, stride parameter s1, group size parameter gL1 and repeat parameter r1, and a second stride view definition, VDefSt2, may be characterized by offset parameter o2, stride parameter s2, group size parameter gL2 and repeat parameter r2. The composition of VDefSt1 and VDefSt2 may then be simplified to a single stride view definition, VDefSt*, with updated parameter list, i.e.,
VDefSt1(o1, gL1, s1, r1, VDefSt2(o2, gL2, s2, r2, <MAT>)) = VDefSt*(o*, gL*, s*, r*, <MAT>).

Therein, the updated view parameters can be expressed as functions of the two original view parameters, viz. o* = o2 + (o1 mod gL2) + o1/gL1, gL* = gL1, s* = s2 (s1/gL2) and r* = r1. In embodiments of the invention, a simplification is not always possible. Feasibility conditions, e.g. based on the composed view types and/or the view parameters used therein, may be formulated and verified by the compiler before taking a decision as to whether a simplification transformation is to be applied to a particular nested view definition.

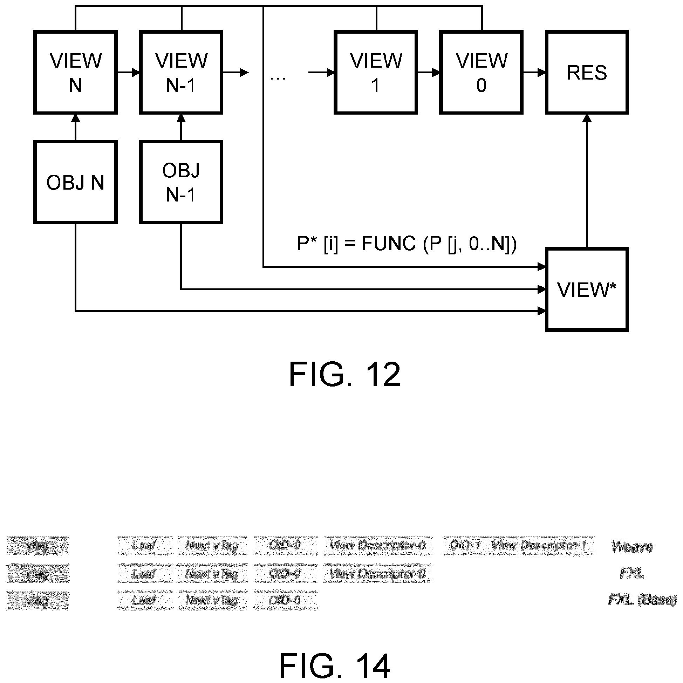

FIG. 12 is a block diagram that illustrates the reduction mechanism for a sequence of view definitions VIEW 0, VIEW 1, ..., VIEW N-1, VIEW N, operating on the two lowest-level application objects 'OBJ N' and 'OBJ N-1'. The simplification mechanism determines a reduced view definition VIEW* that takes the two application objects and modified view parameters as inputs and that produces, when materialized, the same data selection result 'RES' as obtained by the sequence of view definitions. Furthermore, the updated view parameters are functions of the view parameters of all view definitions of the sequence of view definitions. In other embodiments, at least one of the two application objects, or additional application objects, may be paired with different view definitions in the sequence of view definitions, i.e., do not have to appear at the lowest level.

When a memory view is executed on appropriate hardware of the runtime system, as will be discussed further below, these selection rules are first translated into machine language and then applied to the data chunk of the application object. Applying and following the translated selection rules with respect to a specific application object results in the materialization of the memory view. In contrast to the memory view, which can be understood as an abstract representation of the data elements to be selected from the data chunk of an application object, the materialized view corresponds to the actual subset of data elements as obtained by the selection process. As explained before, the selected subset of data elements can be, but is usually not stored as another application object in the distributed, shared global computer memory. The view remains immaterialized and its materialization - through view execution - is delayed until the moment where the selected data elements are required for computation. Then, each view is executed in near-core view execution hardware and data elements of the selected subset of data elements are briefly and transiently generated, i.e. materialize, directly in one at least one of a scratchpad memory directly accessible by the cores, one or more node-local cache memories, and core registers. It is possible to define or derive additional views and their corresponding view objects based on or acting on previously created views, e.g. by including a reference to an already existent view definition in the view definition of the added views. Computation results, if not reused as immediate values by the cores, are typically stored in an output data object, i.e. a data containing application object. It can be beneficial for data integrity and security to avoid any direct access to the output data object by the user. In this case, a corresponding memory view object (e.g. base view object) can be created, together with the output object or subsequently, through which the user and the processor cores of the compute nodes are allowed to access and interact with the computed outputs. Exposing raw data, selected data and/or computed data of application objects as view objects indirectly to the user has the additional advantage of increasing the data integrity of application objects and preventing accidental or malicious modification of sensitive application object attributes, e.g. within the metadata chunk of the application object.

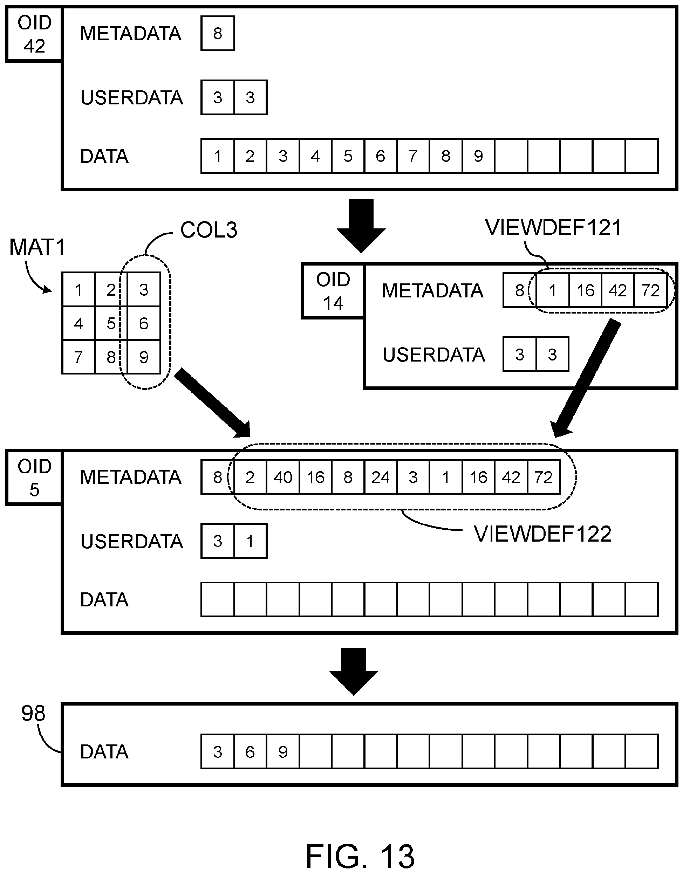

FIG. 13 illustrates the difference between a view object, the indirectly referenced input data object to which the view definition associated with the view object is applied, and the materialization of the executed view definition. The data set of the input data object 42, viz. with OlD equal to '42', comprises nine data elements, viz. the nine integers {1, 2, 3, 4, 5, 6, 7, 8, 9}, which are stored linearly the 'DATA' chunk of the input data object. Again, linear storage means that the logical addresses of the data elements can be computed through a linear function B + i*s in the input data object's private logical memory space, where 'B' is the base address or offset (e.g. expressed in bytes), 's' is the size (e.g. in bytes) of each data element and 'i' is the index. This amounts to saying that the storage characteristics of the data elements are equivalent to a one-dimensional array in the 'DATA' chunk when the logical memory space is used to expose the data elements to the processing units of the compute nodes, e.g. processor cores.

In the present example, the information within the 'METADATA' chunk specifies the size of the individual data elements in the 'DATA' chunk, e.g. each data element being eight bytes wide. The 'USERDATA' chunk comprises structure information about the underlying user-provided data structure. In the present example, the data structure specified by the user is that of a 3x3 matrix, 'MAT1', with entries 'one' to 'nine'. Accordingly, the 'USERDATA' chunk compromises a first entry and a second entry, e.g. the two entries '3' and '3', respectively representing the number of rows and columns of the underlying user data structure.

The memory view operation with respect to the matrix-type input data structure corresponds to the selection of the rightmost matrix column, 'COL3'. The column 'COL3' to be selected from the matrix 'MAT1' being a 3x1 vector, the corresponding entries into the 'USERDATA' chunk of the view object '5' are 'three' and 'one' respectively. Given that the data elements of the input matrix are stored in a row-wise fashion in the 'DATA' chunk of the corresponding input data object, the memory view definition advantageously encodes a stride access pattern with a logical base address equal to the address of the third data element and a stride equal to size of three data element, i.e. every third data element needs to be selected, starting from the third data element, in order to obtain the desired data elements of the third matrix column. This is effectively achieved by the view definition 'VIEWDEF122', following the first item in the 'METADATA' chunk of the view object '5'. This view definition comprises the ordered 10-tuple < 2, 40, 16, 8, 24, 3, 1, 16, 42, 72>, which is a flattened version of the nested view definition < 2, 40, 16, 8, 24, 3, <1, 16, 42, 72> > that indirectly references the application object '42' through the base view definition 'VIEWDEF121' of base view object '14'. This flattened version is an acceptable input format, e.g. can be interpreted, by the view execution hardware, e.g. dedicated hardware blocks comprised by the data distribution (co-)processors. Knowing that the data object '42' is exposed to the compute cores and user code through the corresponding base view object '14', one correctly concludes that the last four tuple entries < 1, 16, 42, 72> of the stride view definition, together, form the base view definition 'VIEWDEF121' of the base view object '14'. The stride view definition 'VIEWDEF122' of view object '5' encodes the following view parameters:
- a first type code, tc1 = 2, indicating a stride view operation over a one-dimensional array representation of the input matrix (i.e., the representation that would result from a materialization of the base view definition associated with the input matrix);
- a first view length parameter, vLen1 = 40, expressing the overall byte-size of the view definition 'VIEWDEF122' in computer memory, thereby allowing to determine the last entry of the 'METADATA' chunk or the position of the next entry into the 'METADATA' chunk following the view definition (e.g., ten parameter entries of 4 bytes each);
- the offset parameter, offset = 16, indicating the number of bytes to skip in the 'DATA' chunk of the virtual target before starting the striding process, i.e. the number of bytes to advance in order to reach the position of the data element where the selection process begins (e.g., stride operation starts with the third data element in the 'DATA' chunk of the input data object as there are two 8 byte-wide entries preceding the third data element);
- the group size parameter, groupLen = 8, indicating the number of consecutive bytes that form a single group of data elements to be selected and periodically extracted (e.g., a group consisting of a single data element corresponds to 8 bytes),
- the stride parameter, stride = 24, expressing the byte-distance between consecutive groups of data elements to be selected and periodically extracted (e.g., three consecutive data elements correspond to 24 bytes in the logical memory space associated with the input data object, thus every third element is selected),
- the repetition parameter, repeat = 3, stating the total number of groups of data items to be selected and extracted from the input data object in accordance with the stride access pattern (e.g., the selection and extraction of a group containing a single data element is repeated three times),
- a second type code, tc 2= 1, stipulating a base view representation of the input data object (because data objects are accessible through their corresponding base view objects),
- a second view length parameter, vLen2 = 16, expressing the byte-size of the base view definition 'VIEWDEF121' in computer memory;
- the OlD '42' of the underlying input data object referenced by the base view;
- the data length parameter, dLen = 72, expressing the amount of data to be selected and taken from the underlying input data object, referenced by the base view, as a number of bytes (since the stride view operates on the full 3x3 matrix, all nine data elements must be retained in the first place, before performing the stride access, which result in 72 bytes of user data).

It is noted that the data element size of view definitions (e.g., four bytes in the previous example) does not have to but can be equal to the data element size of the underlying data objects (e.g., eight bytes in the previous example). It is an advantage of embodiments of the invention that view definitions describing selections of data from large data objects within the computer memory can be stored very compactly and expressed efficiently through lists of view parameters. As a result, view objects occupy a much smaller portion of the computer memory as compared to the data selection they represent. Moreover, a base view definition for the underlying input data object could yield a partial selection of the matrix elements in other examples. For instance, the data length parameter for the base view definition for data object '42' could be set to '54' if column data pertaining to the last row is always discarded or could be set to '63' if the user code always selects the first column.

Upon execution of the stride view definition 'VIEWDEF122', the view on the underlying data object '42' materializes, e.g. sequentially on a per-element basis, into the desired subset 98. Byway of example, a compute core requesting the 2^{nd} element of the stride view on the underlying application object '42' would issue a memory read request for offset 1*8 in view object '5'. Behind the scenes, the view execution hardware would convert this to a read request into application object '42' at offset 5*8.

The 'DATA' block of the view materialization '98' contains the subset of data elements that has been selected from the input data object '42', i.e. the set {3; 6; 9} corresponding to the selected column 'COL3' in the present example. To interpretate the structure and size of elements of the subset of selected data elements, the view execution hardware may fetch the metadata and user data information from the view object '5', the view object that is defined at the highest level of hierarchically defined views (i.e., view compositions). If needed by the compute cores too, the view execution hardware can forward metadata and/or user data information to the requesting compute core. Alternatively, the compute cores may be configured to directly issue requests for reading the metadata and/or user data information in an application object, e.g. a view object.

In embodiments of the invention, a logical memory space that is "private" to a memory object (e.g. application object) means that this logical memory space is not used by or shared with other memory objects. This does not mean that memory object data cannot be shared by tasks or processes running on different compute cores or compute nodes. As a matter of fact, the right to read the data of memory objects present in the computer memory may be given to different tasks, executing locally on the same computer node or remotely on another compute node, in parallel by revealing and communicating the object identifiers to the relevant tasks. In embodiments of the invention, each task is represented by a task object and includes a code block to be executed and arguments needed for the code block. These arguments comprise, for instance, a list of input and output object references, e.g. the object identifiers (OID's) of those memory objects in the distributed shared global computer memory that contain the input data to be consumed by the task or store the output data which is produced by the task after task completion. When a task is executed on a compute node, the compute core of the compute node charged with the execution of the task is executing machine instructions representing the user code statements within the code block. A local copy of the data output object to which task outputs or computation results are written during task execution is created locally on the compute node on which the task is being executed and is flushed to the computer memory as soon as the task has finished execution. During execution, each task has exclusive read/write access to the local copies of the data output objects that have been declared in its argument list. After flushing, the data output object becomes available in the distributed, shared global computer memory, hence is accessible to other tasks.

Moreover, each task may generate one or multiple child tasks during its execution, which are associated with the yet outstanding work to do. In other words, tasks are considered units of computational work to be done and child tasks can be created by parent tasks to further break down the computational work into smaller units. The tasks in accordance with embodiments of the invention preferably do not rely on return addresses or other return values but create child tasks as continuation tasks which operate and further process the outputs produced by their parent tasks. Task dependency data structures may be implemented on the different compute nodes to manage and track the status and unresolved dependencies of each task (e.g., scheduled but not ready for execution due to unresolved start dependencies, scheduled and ready for execution, executing, executed but not yet terminated due to unresolved stop dependencies, and terminated).

Upon flushing, the data output object becomes read-only, i.e. behaves like an immutable memory object. Modifications of memory objects residing ephemerally in the computer memory therefore require the creation of new memory objects in which this modification or alteration of the data can be expressed. This has the advantage that memory objects can be made globally available to tasks executing in parallel on compute nodes of the same or different compute nodes of the distributed multi-node computer architecture, without having to worry about data consistency in the computer memory. This means that the distributed object-based computer memory is intrinsically coherent. Memory objects that are no longer used or needed for computation may be identified, e.g. by a garbage collection process, and their OID's may be relinquished. Optionally, their contents may be erased or overwritten before the memory object and its OlD are released. This helps freeing up the multiple distributed portions of the computer memory that were occupied by the data fragments of the now relinquished memory object.

As described previously, the compute nodes composing the supercomputer may each contain an object cache memory that is storing memory objects, or relevant parts thereof, at the node-level. Even though it is feasible to maintain more than one local copy of a memory object, or fragments thereof, in a corresponding number of compute nodes, not every compute node is allowed to modify or write into a memory object that is a shared resource. More specifically, only the node-bound creator task that caused the generation of the memory object as shared resources may have the right to alter the contents of the memory object, while tasks that are not native to the node are lacking these rights. Tasks running on different nodes may still be able to read information content of shared memory objects that are stored in the local object cache memory. Typically, no consumer task is spawned while a producer task is running on the same object (data dependency check in task graph), such that a programming model for this computer architecture can anticipate write inconsistencies in shared memory objects.

To produce results at the application level and progress in the execution of a user program, the compute cores of a distributed multi-node computing system, e.g. a supercomputer, regularly require data inputs which are transiently stored as one or more data fragments of an application object in the distributed computer memory. The user program code is typically decomposed dynamically into a plurality of tasks, e.g. via dynamic task creation or task spawning mechanisms, which preferably can be executed concurrently and in parallel on a multi-node machine. Each task comprises a piece of the user program code (code block), which also defines data inputs and outputs. According to embodiments of the invention, view objects are used to expose the data content of application objects to the user. This means that the user program code interacts with the data fragments of application objects in the distributed computer memory by means of view objects. Here, interactions include the instructions pertaining to the creation, reading, updating and deletion of application objects or part of its contents. Consequently, compute core instructions related to memory access must consider the view objects and imply the execution of view definitions that are encapsulated in the view objects. In addition to the increased level of security, the use of view objects offers the advantages of describing selected subsets of application object data in a compact and memory efficient way, facilitating concurrent access and sharing of application object data across many compute nodes in a synchronization-free manner (e.g. the same reference to the application object can be used in multiple view objects), and the flexibility to compose or develop user-specific views. In some embodiments of the invention, the programmer may be allowed to implement user-specific views by composing built-in views on data objects representative of user data structures. The online compilation of built-in views into hardware-readable instructions for execution of the view is well defined and predictive. For instance, the programmer may define constructs like *'vector. tride(14,2).stride(7,3)'* on a data object representing the user's vector. A software library, available for use by the compiler, may comprise code that causes the generation of a library view object in response to the construct. This library view object is assigned a unique OlD and contains, in its metadata chunk, a definition of the view on the user vector as specified by the programmer. More generally, a software library may be provided for the use by developers, which library contains predefined data structures like scalar, matrix, sparse matrix, graph, etc., and software routines that run in the background to create the corresponding view objects for the respective data structures. This has the advantage that well known, and commonly used data structures are made available to the developer, but the complexities of creating and dealing with views on these data structures will be hidden from the user. This allows users to write code statements like *'myMatrix[1..5,2..4]'* which is translated by the software library behind the scenes into a view on a matrix that starts at row 1, column 2 and goes to row 5, column 4. Hence, operations like slicing, sub-array selection and index-based selection elements of (multi-)dimensional arrays, or any combination thereof, are all supported through corresponding view objects.

Modern processors and compute cores are adapted to support data parallelism, e.g. operate efficiently on large one-dimensional arrays of input data. For instance, vector processors and processors having a SIMD or SIMT microarchitecture provide multiple execution lanes to enable data level parallelism. View-based memory access in accordance with embodiments of the invention has the advantage that vectorized input data for the compute cores, i.e. vectors, can be obtained nearly effortlessly from the data chunk of materialized view objects. Even complex selections of data elements from the data contents of one or more application objects are linearly represented in the data chunk of the materialized view object describing this selection. The view definitions for the application objects of interest can thus be executed at runtime to obtain materialized views, vectors worth of data elements can be extracted (periodically if needed) from the materialized view and placed on a fast scratchpad memory for consumption by the one or more compute cores of each compute node. This means that the vector data is prepared ahead of time and is nearly instantaneously accessible to one or more compute cores, which greatly reduces memory latency. As a result, there is less motivation to try hiding memory latency by other methods like increased thread parallelism. As soon as the view has been executed and is ready for consumption by the compute cores, a task operating on these views may be placed into the instruction buffer or passed on to the instruction unit of the compute core, causing the data selected by the view to be moved vector-by-vector from the scratchpad memory into the appropriate registers (e.g. vector registers) of the one or more compute cores. If needed, a pointer to the location of the ready view inside the scratchpad memory may be passed alongside the task that uses the view. Embodiments of the invention are not limited to the use of scratchpad memories; other types of memory or buffers may be used to temporarily store the materialized views. Furthermore, different ways of implementing view execution units exist, data distribution processors merely being one example thereof. Although it is preferable to implement the view execution hardware units close to the compute cores, it is nevertheless possible to implement view execution units elsewhere in the compute nodes, e.g. as a part of the RTM units.

Accordingly, compute cores in distributed multi-node computing systems may be configured to effectively operate on views instead of single data inputs. Moreover, the views can be efficiently materialized at runtime with little delay, i.e., can be materialized between the moment of scheduling of a task and its execution by one of the compute cores. Here, the scheduling of a task refers to the moment in time where the timing of its execution, and possibly also the location of its execution, is no longer under the control of the user's program code but is managed by a task manager during runtime. In embodiments of the invention, the RTM units of the different compute nodes, which are part of the distributed and multi-node computing system's runtime environment, may be configured to launch and sustain the task manager as a software process (possibly running on dedicated hardware).

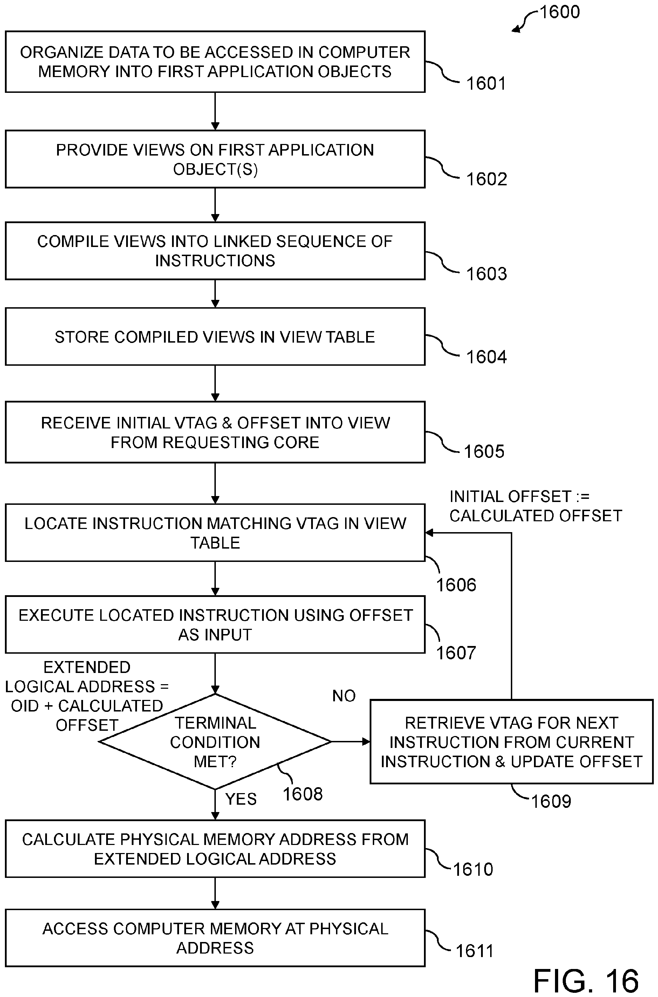

With reference to FIG. 16, an exemplary method 1600 of accessing application objects, present in a distributed computer memory, through view objects is now described. Data to be accessed in the computer memory is organized into first application objects, i.e. data objects, in step 1601. As explained previously, elements of raw data can be grouped into data chunks and stored as data objects with disjoint logical memories and distinct unique object identifiers. Data type and data format/shape information may be respectively stored in each data object's metadata chunk and user data chunk. Next, views on the data objects available in the computer memory are provided in step 1602 to obtain various selections of data elements by reference to one or more underlying data objects. End users may define views that are tailored to their specific needs by instantiating and/or composing built-in views of a software library. View objects are created as second application objects and contain the different view definitions that describe the desired selections of data without storing it. Before compilation, each view definition is preferably expressed by a data structure that stores the view parameters in a prescribed format. For instance, list-like data structures have been used in the examples of FIG. 3 to FIG. 7 to create and define various types of memory views.

During the compilation step 1603, the view definitions of the user program code are translated into machine-level versions which can be interpreted by one or more view execution units, e.g. dedicated hardware units that support view execution such as the earlier mentioned data distribution processors. The machine-level version of a view definition comprises or consists of a set of machine instructions which must be carried out sequentially to determine the logical address of every one element of the selection of data elements encoded by the view definition. Compiled views, i.e. the sequence of machine instructions obtained from compilation, are stored in the rows of a tagged view table in step 1604.

A core requesting memory access to a data element that is expressed by a view generates a request that specifies the relevant view object and the position (offset) of the data element inside the view object for which memory access is requested. Rather than using very long OID's, the compute cores include the shorter view tag information into the memory access request, which facilitates locating the compiled view information in the tagged view table. The request sent by the compute core is received by the view table in step 1605, which reads the view tag information (VTAG) from the request and compares it to the tags of the tagged view table in step 1606 to locate the machine instructions of the compiled view through which a data element is to be accessed. The so located machine instruction is forwarded to the view execution hardware execution. The index or offset in the (empty) data chunk of the accessed view object is passed as an input argument alongside the machine-level version of the view definition to the view execution unit in step 1607. This enables the view execution unit to determine which one of the elements of the selection of data elements encoded by the view definition is effectively requested and requires logical address calculation (the logical address indicating the position in the underlying data object where the requested data element can be found is in generally not known explicitly and needs address calculation). The outcome of the logical address calculation by the view execution hardware corresponds to an extended logical address including the OlD of another application object referenced by the initially accessed view object as well as the (data chunk) offset into that referenced other application object. Alternatively, the OlD and offset information may be extracted as separate outputs from the extended logical address. In the case that the view object initially accessed by the compute core has been compiled into more than just a single machine instruction, a terminal condition in step 1608 is not met and the view tag information (VTAG) that is pointed to by the currently executed machine instruction is retrieved in step 1609. Furthermore, the calculated offset in the output of the view execution hardware is used to update the offset information in step 1609. together with the data chunk identifier, number or index, is representing the position of the data element inside the view object for which memory access is requested. An extended logical base address for the data chunk may be derived from the OlD of the compiled view object, to which the data element offset is added. Steps 1606 to 1609 are then re-iterated while the terminal condition is not yet met, each iteration resulting in the localization and retrieval of the following machine instruction of the compiled view under access by the updated VTAG information and in the update of the offset in the currently referenced application object (input argument to the view execution hardware). Data objects do not refer to other application objects by means of views and cause the terminal condition to be met in step 1608. That is, a machine instruction under execution that refers to a data object will in general cause the exiting of the iteration loop. This is followed by the computation of the physical memory address based on the extended logical address (or combination of OID and simple logical address) in step 1610, e.g. by the MOMU, and the actual access to the value of the requested data element in the computer memory at the computed physical address in step 1611. Typically, the physical address as such is not indicative of the data element's position in the chunk nor of the application object containing the data element. The read value of the requested data element may then be transferred to the compute core's register file for consumption.

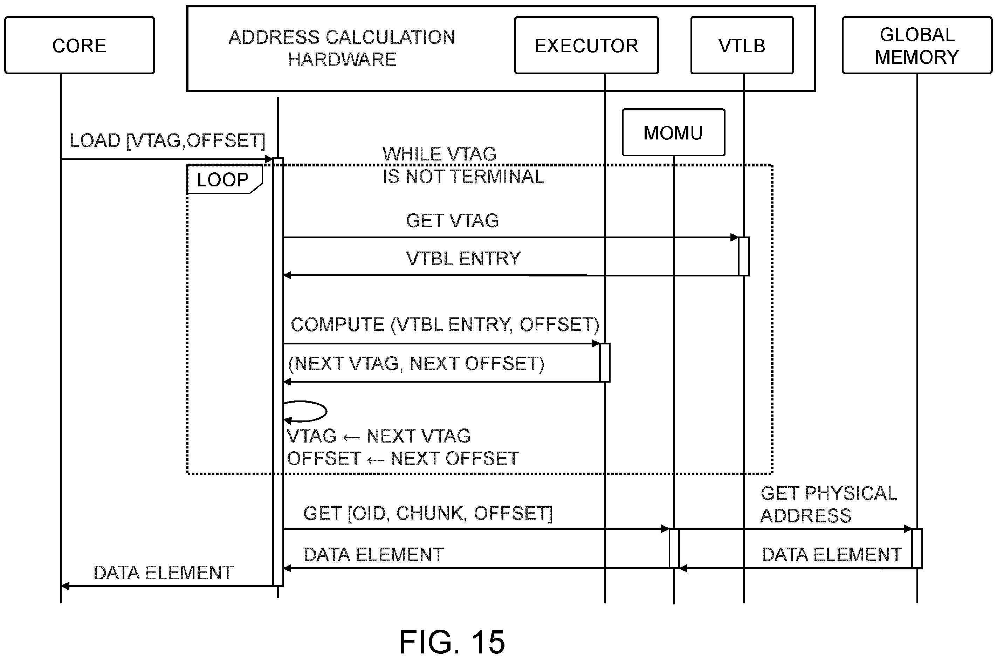

The iterative calculation of the offset is further visualized in FIG. 15. The compute core issues a memory access request (e.g. load command) for a data element in the computer memory by specifying an initial view tag (VTAG) and offset. The initial view tag identifies the view object in the view table (VTLB) which expresses the requested data element and the initial offset indicates its position in the view object (more specifically in the not yet materialized selection of data elements represented by the view). A different one of the compiled view objects stored in the view table (VTLB) is matched with the current view tag (VTAG) during each iteration and executed by the view execution unit (EXECUTOR) of a logical address calculation hardware block. The view execution unit accepts the current offset as an input argument and determines a new offset and view tag as output arguments. During the last iteration, the view execution unit also supplies the OlD for the underlying data object. A physical memory address is calculated from the extended logical address [OID, chunk, OFFSET] obtained for the final view tag (when the terminal condition is met) and the requested data element can be accessed in the global computer memory at that physical memory address. The data element is then forwarded to the compute core for consumption.

The order in which the machine instructions for a specific view definition are executed is already encoded as a part of the machine instructions themselves, viz. the machine-level instructions with respect to a compiled view definition are self-referential and fully determine their own control flow. For example, a sequential order to be followed when executing one by one the set of machine instructions may be specified indicating the first and last instruction to be executed and embedding in each instruction a pointer to the next instruction. As explained further below, the compiled machine instructions relating to one or more view definitions may be conveniently kept in a tagged view table, in which case pointers to the next instruction simply correspond to the tag values for the next instruction within the view table. A predetermined field in each instruction may be allocated to store the tag value for the next instruction. If there are several possible next instructions and the next instruction to be taken depends on the offset value that is passed to the view execution hardware, e.g. a branching condition, the tag value of each of the possible next instructions can be stored in a different field of the current instruction. The branching condition is evaluated for the specified offset value to determine which tag value to select as a pointer to the following instruction.

At least some of the machine-level instructions of a set of instructions available during compilation may include one or more operand fields, e.g. a first and a second operand field, to which view parameters of the view definition can be assigned. For instance, a first operand field may accept the stride parameter, and a second operand field may accept the offset parameter of a stride view definition. Moreover, some of the machine-level instructions of a set of instructions available during compilation may include an object reference field to which the object identifier (or a shorter tag value that has been dynamically assigned to the object) of a referenced application object is assigned. Another field of the machine-level instructions may be reserved for opcode that determines the arithmetic or algorithmic operation to be performed by the view execution unit. The opcode may specify different functional subunits of the view execution unit depending on the type of view operation that needs to be performed. For instance, an arithmetic operation like addition, multiplication or Boolean comparison (conditional operation) as encountered in stride or base-type views may be performed by an ALU of the view execution unit, whereas more complex operations as encountered in indirect-type views may be performed by a micro-program CPU. Indeed, an algorithmic representation of complex view definitions, e.g. as often encountered in indirect-type views, may be compiled into a small executable code block (e.g. only a couple of opcode instructions long) and executed by the micro-program CPU. In some embodiments of the invention, the compiled code can be stored in the distributed, global shared computer memory and a reference to the compiled code for the algorithmic representation may then be included in the object reference field of the machine-level instruction associated with complex view definitions. Preferably, the compiled code is stored directly in one or more entries of the tagged view table to speed up the view execution process, thus avoiding longer latency access to the distributed globally available computer memory. For instance, an entry into the tagged view table with respect to a compiled algorithmic representation may be given as [typePROG, opcode(s), next vtag]. This is possible, because the number of available opcodes can be relatively small for address calculation hardware blocks like ALUs with limited capabilities.

A terminal flag (e.g. a leaf node status bit) may also be included in each machine-level instruction to indicate the last machine-level instruction of a compiled view definition. This means that the terminal flag serves as a stop condition for the evaluation of the compiled view definition with respect to a given offset (the offset that is indicative of the element number in the selection of data elements). As long as this stop condition is not met, the view execution hardware will retrieve the pointer to the next instruction from the currently executed instruction and proceed with the next instruction, whereby the calculated logical address resulting from the current instruction is used as the offset (input) for the next instruction. This is also illustrated in the diagrams of FIG. 15. For instance, the tag for the view table entry containing the next instruction may be fetched by the view execution hardware. Hence, the view execution steps through the sequence of machine instructions associated with an initially specified view and iteratively determines an extended logical address/global offset based on the previously calculated outcome until the stop condition is met. The finally obtained extended logical memory address/global offset (including the simple logical memory address and the application object reference - OlD - extracted from the last executed instruction of the sequence), which indicates the location of the requested data element in the underlying data object (which has been indirectly referenced by the requesting compute core through the initially specified view). The initially specified view that is executed is a view on the application object and can be a nested/composed view, which means that other intermediate view definitions are evaluated when stepping through the sequence of machine instructions. Eventually, the extended logical memory address (or OlD and data chunk offset information) can be translated into a corresponding physical memory address by computation (e.g. hashing operation) and the value of the requested data element can be read from the shared global computer memory at the calculated physical address.

Depending on the available set of machine instructions used for the compilation of the view definitions, a built-in type may either be associated with a corresponding one of the available instructions or is decomposed into a sequence of available instructions. This association is valid for a single logical address evaluation, e.g. when the logical address for a single data element of the targeted selection is calculated. For instance, a stride view may be associated with a single machine-level instruction that causes the view execution unit to perform a linear operation of the form A*x+B (scale and shift operation), where operands A and B correspond to the (scaled) view parameters 'stride parameter times block size' and 'initial offset times block size' of the stride view definition. Alternatively, the single instruction for the linear scale and shift operation may be split up into two consecutive operations: one scale operation and one shift operation. Likewise, base view definitions, weave view definitions and indirect view definitions may be associated with respective ones of the set of machine-level instructions. Machine instructions related to weave view definitions may contain a division-by-constant instruction to determine which referenced application object to and offset therein to select next, and/or may contain opcode for the evaluation of an offset value-dependent branching condition, the outcome of which determines the tagged view table entry for the next instruction, there being at least two alternative tagged view table entries for weave views (except for the case that weaving is performed with respect to the same view reference, but this case can be treated separately by compiler optimization). As explained before, machine instruction associated with comparatively complex views such as indirect views may contain compiled code that triggers a micro-program. In typical embodiments of the invention, the sequence of machine instructions associated with a particular view is revisited every time a new offset value regarding this view is passed to the view execution unit.

FIG. 14 is a schematic block diagram of a tagged view table. Successive rows of the view table receive a view tag (vtag in short) through which they can be identified. Furthermore, each row of the view table stores a machine-executable description of a view or part of a view (if split between several rows), for instance machine instructions including opcode, terminal flags, operand fields and the vtags belonging to the next instruction. In the present example, the field 'Leaf' is reserved for the exit condition, e.g. indicating whether the view associated with the currently selected row is referencing another view in another row or is the last view of a sequence of nested views. The 'Next vTag' field holds the vtag of the following instruction to be executed, if any. The 'OID-0' field holds an identifier of the underlying application object (not required or empty for view types like weave or stride, which never directly refer to a data object) and the 'ViewDescriptor' fields hold the opcode and view parameters. As views of the weave type accept a reference to a second view as input, there are two 'ViewDescriptor' fields per row entry. In the present example, the second row corresponds to an easily computable logical address operation (FXL) such as stride views. The third row represents a base view on an underlying application data object as a primitive based on which more complex views can be derived.

User-defined view definitions can always be decomposed into a chain of machine-level instructions that are associated with built-in types. Indeed, every recursive and non-recursive view definition can be represented as a tree structure (e.g. expression tree) or directed acyclic graph (DAG) and executing the view definition amounts to visiting the tree/graph nodes of a specific root-leaf path, which depends on the offset value that is passed to the initial instruction (root). Address operations associated with the outermost view definition (zero-level recursion depth) of a composition of view definitions can be assigned to a zero-level root node/vertex of the tree or DAG and references of the outermost view definition (first-level recursion depth) can be associated with edges from the root node to connected first-level nodes). (e.g. child nodes) The address operations associated with the referenced view definitions (first-level recursion depth) are then assigned to the first-level nodes. The referenced view definitions at the first-level recursion depth may themselves include references to view definitions at second-level recursion depth. Therefore, first-level child nodes may be parent nodes to second-level child nodes that are assigned to address operations related to the view definitions at second-level recursion depth, and so forth. It is possible that the compiler breaks up complex address operations into a short sequence of less complex address operations, in which case additional nodes may be inserted between nodes belonging to adjacent recursion levels. A depth level or path length in the tree or DAG therefore does not necessarily coincide with the level of recursion for recursively defined views.

The execution of recursively defined views thus starts from the root node and, if required, continues with subtrees or subgraphs associated with higher levels of recursion depth, until a leaf node is encountered. The output of the address operation associated with each node is calculated and passed on to the node connected along the selected edge (or single edge if there is no branch condition at that node). In embodiments of the invention, a leaf node is indicated by setting the terminal flag to a predefined value and typically represents a base view definition that references the underlying application object directly. This shows that the logical address for a data element of the selection of data elements can indeed be calculated by following a deterministic path of the tree or DAG. The tree/DAG (every tree, in fact, is also a DAG) can be mapped onto the view table in hardware if one identifies tree/graph nodes with machine-level instructions and edges between the tree/graph nodes with the pointers/tags to the next machine-level instruction that receive the currently obtained logical address as input argument. The terminal flag of machine-level instructions can be used to indicate leaf nodes as an exit condition.

The compilation step generally happens at runtime, when tasks operating on views are scheduled, e.g. the compilation is just-in-time. Scheduling of a task may be delayed if an insufficient number of view table entries are available in the view table memory of the corresponding task manager/RTM unit of the compute node that attempts to schedule the task. In embodiments of the invention, the task manager process run by the RTM units of the different compute nodes may carry out the compilation step as part of the scheduling of tasks. The application objects required for task inputs and outputs are declared in the task's argument list at the time of task scheduling. Since the object identifiers (OIDs) of these input and output objects in computer memory are generated dynamically at runtime and are not known beforehand, the compilation is done at runtime and uses the OlD information to populate the view table entries. The task input and output objects are then accessible to the compute cores through their corresponding tag in the view table. Moreover, as the view table can be shared among all the compute cores of a compute node, it is generally unknown beforehand how many and which view table entries are still in existence in the view table at a particular moment in time during program execution. Previously created view table entries may have been cleared and new view table entries added, whereby the position of later created view table entries within the view table is constantly shifting.

Additionally, the compiler and/or the runtime system may optimize the machine-level version of the view definitions. As explained previously, an online reduction or simplification algorithm may be applied to the view definitions to remove some or all the sequential steps required for the execution of nested views (recursively defined view definitions that include references to another view definition).

The RTM unit of each compute core may be configured to populate and manage a common, tagged view table with respect to the view objects at runtime. The view table managed by the RTM unit of each compute node may be shared among the compute cores of the compute node and stored in a dedicated memory that is private to the RTM unit or the task management process run thereon. The machine-level instructions of compiled view definitions are stored in the different rows of the view table together with a view tag. The view tag is used to search and retrieve machine-level instructions that are stored in the view table. In embodiments of the invention, the view table acts like an instruction cache memory vis-à-vis the view execution unit. The view tag is used for row addressing in the instruction cache memory and the corresponding row entry is a machine-level instruction that can be executed by the view execution hardware, e.g. address calculation hardware units of the data distribution processors on each compute node. Compute cores that request data access from an application (data) object do so indirectly through the one or more intervening views that have been defined on the application object. As such, the compute cores do not have to deal with OIDs but reference the requested data through the corresponding view and offset (in the selection of data elements represented by the view upon materialization). This is reflected in the computer architecture by the fact that the RTM unit of the corresponding compute node performs the translation of OlDs into tags of the view table during runtime compilation and task scheduling. To be consistent with this translation between OIDs and view table tags, data requests of the compute cores include the view table tag of the view on the application data object (tag for outermost view for nested views) and the offset indicating the location of the requested data element within the data selection represented by the view. The RTM units are configured to pass the view table tags as arguments to the compute cores, which use them at the time the data referenced by the view views is computed on. This is also shown in the block diagram of FIG. 15.

When one of the compute cores is about to process data elements of a memory view, e.g. in vectorized format, the view table tag (vtag) and an index range may be signaled to the view execution unit in the form of a data packet ("macro"). This signal is essentially a memory access request, e.g. a load command that has been delegated to the view execution unit, e.g. the one or more data distribution processors on each compute node that comprise address calculation hardware units. The view execution unit receives the memory access request and extracts the view tag and the index range. It is possible that the index range consists of a single index (or corresponding offset value). The view execution unit may then iterate over the index range to determine the logical address of each one of the indexed data elements of the selection of data element represented by the view. At each iteration step, the view execution unit is executing the view definition associated with the received view tag to obtain the logical address of the selected data element of the view that corresponds to the current index. In embodiments of the invention, the index may be realized as a 1D offset value into the view. This means that index pair or tuples for two or higher-dimensional data structures, e.g. matrices, tensors, etc., are converted into a single one-dimensional index or offset during compilation. View execution includes stepping through the view table as indicated in FIG. 15.

The view execution unit may then generate a memory access request that includes the (simple) logical address and the object identifier of the application object, or alternatively includes the corresponding extended logical address, and dispatch the request to the MOMU of the compute node. The MOMU in turn calculates the physical address in the distributed computer memory based on the logical address and the object identifier contained in the memory access request. The physical address as calculated by the MOMU is used to derive a network address as the new destination for the memory access request, e.g. a portion of the physical address may be used as the network address. The new destination may be an end node of the system-wide communication network and corresponds to a memory node of the distributed computer memory. Another portion of the physical address may be used to locate the requested data fragment within the memory node and can be embedded into the memory access request. The MOMU then forwards the updated memory access request to the new destination, e.g. a memory module of the distributed shared global computer memory. There, the requested data element is located and depending on the type of request (e.g. read or write), the data element is read from the distributed computer memory or written to the distributed computer memory. In embodiments of the invention in which the compute nodes comprise a node-local cache memory unit for object fragments that are present in the distributed computer memory, the memory access request from the MOMU may first be sent to the cache memory unit of the compute node. In case of a cache hit, the requested data fragment can be served directly by the cache memory unit. Otherwise, the memory request may be redirected to the distributed computer memory.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. A computer memory access method (1600) comprising:
- organizing data to be accessed (1601) in the computer memory as application objects, a unique object identifier being assigned to each application object residing in the computer memory, logical addresses for data elements included in each application object having corresponding physical addresses in the computer memory,
- providing a view (1602) on at least one of the application objects present in the computer memory, the view including a view definition expressive of a selection of data elements from one or multiple referenced application objects, wherein selected data elements expressed by said view are linearly addressable through an offset by at least one computer core requesting access to said selection of data elements,
- compiling the view (1603) into a linked sequence of machine instructions including at least one machine instruction, thereby obtaining a compiled view,
- storing the compiled view (1604) in a view table and assigning a view tag to each row of the view table, each row of the view table containing a corresponding one machine instruction of the linked sequence of machine instructions and each but the last one machine instruction of the linked sequence of machine instructions including the view tag corresponding to the next machine instruction of the linked sequence of machine instructions as a reference to that next machine instruction,
- in response to a compute core request (1605) for a selected data element expressed through the view, locating (1606) and executing (1607) the compiled view stored in the view table to determine the logical address for and the application object containing the requested data element, wherein the offset for the requested data element is included in the compute core request and applied as an input when executing the compiled view,
- calculating the physical address (1610) corresponding to the logical address of the requested data element,
- accessing the computer memory (1611) at the physical address of the requested data element.

2. The method (1600) according to claim 1, further comprising:
- indicating a terminal condition in the last one machine instruction of the linked sequence of machine instructions when compiling the view,
- for compiled views comprising more than one machine instruction, iteratively executing one machine instruction of the linked sequence of machine instructions until the terminal condition is met (1608),
wherein each iterated execution of one of machine instructions of the linked sequence of machine instructions comprises:
- obtaining a new offset (1609) from the previously determined logical address,
- executing (1607) the machine instruction, using the new offset as input, to redetermine the logical address for the requested data element and, at least if the terminal condition is met (1608), redetermine the application object containing the requested data element,
- retrieving the view tag (1609) corresponding to the next machine instruction of the linked sequence of machine instructions to be executed and selecting the row of the view table that matches said view tag if the terminal condition is not met,
- outputting the logical address for the requested data element, and optionally the unique object identifier for the application object containing the requested data element, if the terminal condition is met (1608).

3. The method according to any one of the preceding claims, further comprising:
- for tasks to be executed by the at least one computer core, identifying views that are input or output arguments of said tasks and compiling and storing said views in the view table at runtime,
- communicating view tag information indicative of a location of each compiled view in the view table to the at least one compute core,
wherein locating one of the compiled views in response to the compute core request comprises selecting the view table row that matches view tag information included in the compute core request.

4. The method according to any one of the preceding claims, further comprising:
- organizing data to be accessed in the computer memory as first application objects having a metadata chunk and a data chunk, each first application object comprising a view definition of the empty type in said metadata chunk and data elements for computation by one or more computer cores in said data chunk, said data elements in the data chunk being indirectly accessible by the one or more compute cores through one or more intervening views,
- organizing and storing views as second application objects in the computer memory, each second application object having a metadata chunk and an empty or non-existing data chunk and comprising a view definition of a different view type than the empty type in said metadata chunk.

5. The method according to claim 4, wherein views of a base view type include a reference to a first application object in the corresponding view definitions, and/or wherein recursively defined views include a reference to at least one other view in the corresponding view definitions.

6. The method according to any one of claims 4 to 5, wherein the data elements of the first application objects selectable through views represent user data structures comprising at least one of vector, tensor, and sparse matrix.

7. The method according to any one of claims 4 to 6, wherein the metadata chunk of each first application object residing in the computer memory further comprises data type information about the data elements contained in the data chunk of that first application object, the method further comprising:
- fetching the data type information from the metadata chunk of a referenced one of the first application objects stored in the computer memory,
- extracting a byte size of data elements contained in the data chunk of the referenced application object from the data type information,
- for a view operating on the referenced first application object, calculating the offset of a selected data element of the referenced first application object as a function of a position index and the byte size.

8. The method according to any one of claims 4 to 7, wherein each first application object residing in the computer memory further has a user data chunk for holding data format information about the data elements contained in the data chunk of the first application object, the method further comprising:
- fetching the data format information from the user data chunk of a referenced one of the first application objects stored in the computer memory,
- extracting data bounds from the data format information,
- for a view operating on the referenced first application object, verifying that the offset of a selected data element of the referenced first application object lies within the data bounds.

9. The method according to any one of the preceding claims, further comprising at least one of the steps of:
- flattening or reducing composite views including a reference to at least one other view in the corresponding view definitions, by replacing said reference to said at least one other view with the view definition that is included in said at least one other view.
- simplifying composite views including a reference to at least one other view in the corresponding view definitions when compiling the composite views, by transforming views operating on other views into views operating on objects referenced by said other views in accordance with predetermined transformation rules.

10. The method according to any one of the previous claims, wherein storage locations for data elements of each application object are distributed uniformly across a physical address space associated with the computer memory, and/or wherein the computer memory is a distributed, shared global computer memory.

11. The method according to any one of the previous claims, wherein each view has a view type associated therewith, there being at least a base view type for selecting a group of consecutive data elements from a referenced application object and, optionally, one or more of the following view types:
a stride view type for periodically selecting different groups of consecutive data elements from a referenced application object,
a weave view type for repeatedly selecting and interleaving different groups of consecutive data elements originating from two different referenced application objects,
an indirect view type for selecting data elements from a referenced application object based on a set of selection indices stored in another referenced application object.

12. The method according to any one of the preceding claims, further comprising the step of managing the view table in a control or instruction memory operatively coupled to a view execution unit adapted to execute machine instructions of compiled views.

13. A computer comprising:
a computer memory for storing application objects containing data elements, each application object being assigned a unique object identifier,
at least one compute node coupled to the computer memory, each compute node comprising:
at least one compute core for processing data elements contained in the application objects,
a node-local memory unit adapted to hold a view table, and
a view execution unit configured to execute machine instructions present in the view table,
wherein each compute node of the computer is configured to perform the method steps of any one of the claims 1 to 12.

14. The computer according to claim 13, comprising a plurality of compute nodes and a communication network interconnecting the plurality of computer nodes, wherein the computer memory is provided as a distributed computer memory and configured to act as a globally shared computer memory for the plurality of compute nodes.

15. The computer according to any one of claims 13 to 14, each compute node further comprising a task management unit configured to:
schedule tasks for execution by the at least one compute core,
compile views that are inputs or outputs to said tasks,
store compiled views in the view table, and
manage view table entries and access to the view table.
